# EUROPEAN PATENT SPECIFICATION

(11) **EP 1 592 275 B1**
(45) Date of publication and mention of the grant of the patent: **21.06.2006**
(21) Application number: 04010204.8
(22) Date of filing: 29.04.2004
(51) Int. Cl.: H04Q 7/38, H04L 12/56

(54) **Relocation, also of parts, of radio resource management control functionality from one BTS to a second in a distributed radio access network**
Verlagerung, auch teilweise, einer Kontrollfunktionalität einer Resourcenverwaltung von einer Basistation in eine andere in einem verteilten Funkzugangsnetz
Déplacement aussi partiellement d'une fonctionnalité de gestion de ressources radio d'un premier station de base à un autre dans un réseau d'accès radio distribué

(43) Date of publication of application: 02.11.2005
(73) Proprietor: MATSUSHITA ELECTRIC INDUSTRIAL CO., LTD., Kadoma-shi, Osaka 571-8501 (JP)
(72) Inventor: Petrovic, Dragan, 64295 Darmstadt (DE); Seidel, Eiko, 64285 Darmstadt (DE); Löhr, Joachim, 64287 Darmstadt (DE)
(74) Representative: Grünecker, Kinkeldey, Stockmair & Schwanhäusser Anwaltssozietät

(56) References cited:
- WO-A-03/017686
- "3rd Generation Partnership Project;Technical Specification Group Radio Access Network; Feasibility Study on the Evolution of UTRAN Architecture; (Release 6); DRAFT3GPP TR 25.897 V0.3.1" DRAFT3GPP TR 25.897 V0.3.1, August 2003 (2003-08), pages 1-31, XP002296477 SOPHIA ANTIPOLIS, FRANCE
- "Universal Mobile Telecommunications System (UMTS); Handovers for real-time services from PS domain (3GPP TR 25.936 version 4.0.1 Release 4); ETSI TR 125 936" ETSI STANDARDS, EUROPEAN TELECOMMUNICATIONS STANDARDS INSTITUTE, SOPHIA-ANTIPO, FR, vol. 3-R3, no. V401, December 2001 (2001-12), XP014005123 ISSN: 0000-0001

## Description

### FIELD OF THE INVENTION

The present invention relates to a method and base station in a mobile communication system for relocating from a controlling base station to another base station within a mobile communication network resource management control functionality of shared channels in a plurality of cells, each cell being controlled by a base station, wherein each of the shared channels is shared by a plurality of mobile terminals within a cell. Further, the present invention relates to a mobile communication system.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

### Legacy UMTS Architecture

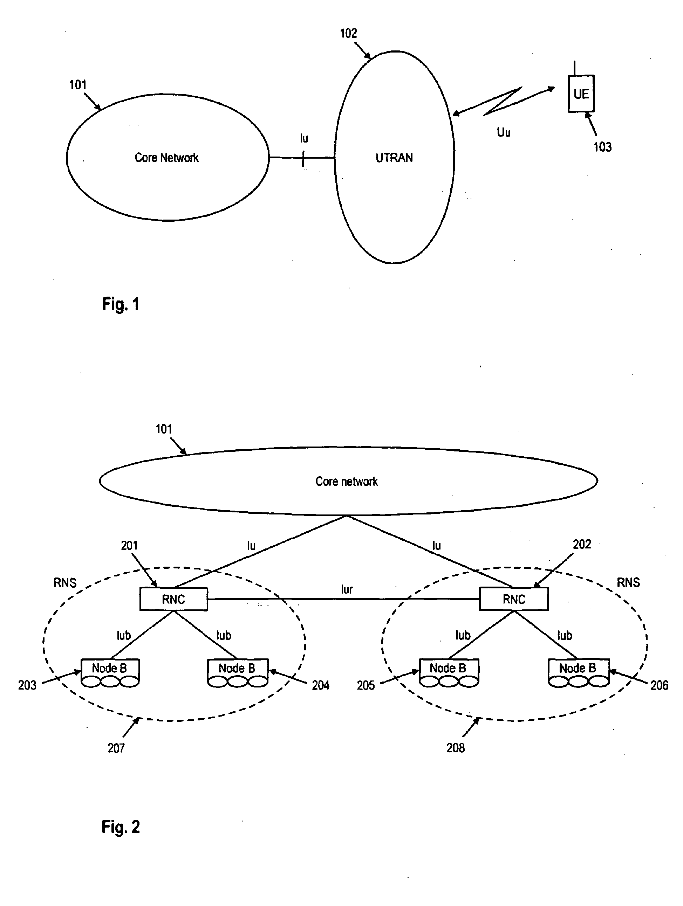

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

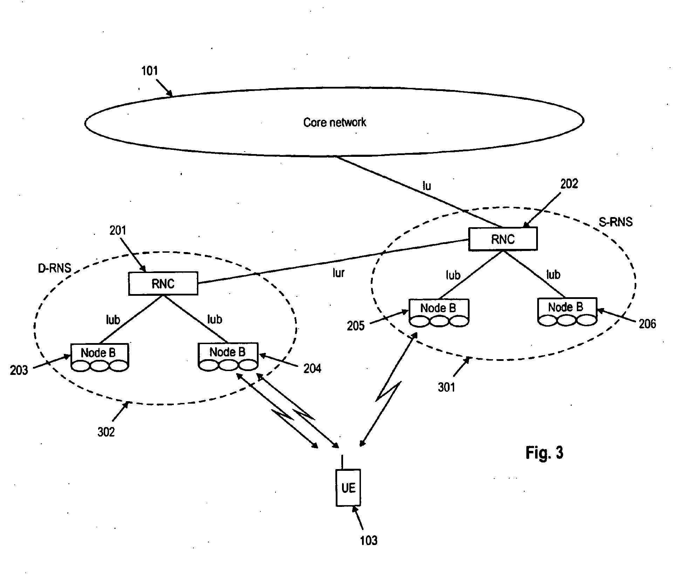

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

Some functions which may be of particular relevance are located in User Plane (UP) and Control Plane (CP) of described network elements are outlined in the following passages.

### RNC: Control plane functions

The Radio Resource Control (RRC) protocol (see 3GPP TSG RAN TS 25.331 "RRC Protocol Specification", V.6.1.0, available at http://www.3gpp.org) on the network side is terminated in the RNC. It comprises following relevant functions:
- Control of Radio Bearers, transport channels and physical channels,
- Measurement control and processing of measurement reports,
- RRC connection mobility functions,
   o Active Set Update,
   o Hard Handover,
   o Cell Update,
   o URA Update and
- Support of SRNS relocation.

The Node B Application Part (NBAP) protocol (see 3GGP TS 25.433: "UTRAN lub Interface NBAP Signalling", V.6.0.0, available at http://www.3gpp.org), Radio Network Subsystem Application Protocol and Radio Access Network Application Part (RANAP) protocol are terminated in RNC at the lub, lur and lu interfaces, respectively. Some of the procedures of these protocols that are used to support RRC functions from above are: Radio Link Setup common NBAP procedure, Radio Link Addition/Deletion dedicated NBAP procedure, Relocation Commit RNSAP mobility procedure, Radio Link Addition /Deletion / Setup RNSAP DCH procedures and Relocation RANAP procedure.

### RNC: User plane functions

RNC terminates MAC and RLC protocols on the network side according to ReI99/4 protocol architecture. The User Plane protocol stack architecture of relevance to Rel5 High Speed Downlink Packet Access (HSDPA) feature will also be provided in the following passages. The settings of these protocols are controlled by RRC.

### Node B: User Plane/Control Plane functions

The physical layer is terminated on the network side in a Node B for an ReI99/4 UMTS architecture. In ReI5, Node B may terminate MAC layer for HS-DSCH transport channel.

Apart from terminating NBAP protocol on the lub interface, there are no control functions in Node B. It should be noted that all of NBAP procedures relevant for this report are initiated from RNC.

### Exemplary User Plane Protocol Stack Architecture in case of HSDPA

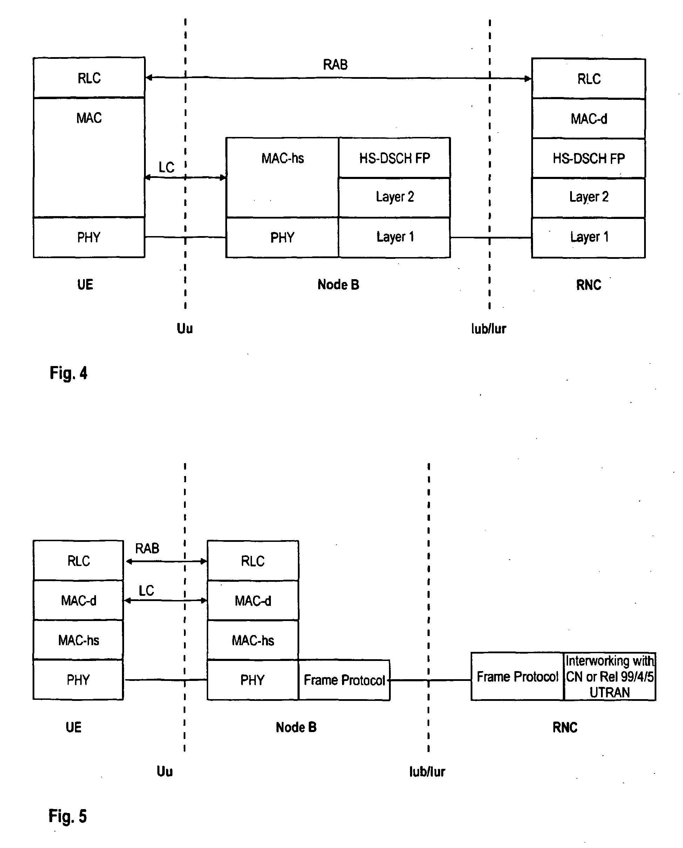

The User Plane Radio Interface Protocol Architecture of HSDPA is shown in the Fig. 4. HARQ protocol and scheduling function belong to MAC-hs sublayer that is distributed across Node B and UE. It should be noted that a selective repeat (SR) Automatic Repeat Request (ARQ) protocol based on sliding window mechanisms could be also established between RNC and UE on the level of RLC sublayer in acknowledged mode. The service that is offered from RLC sublayer for point-to-point connection between CN and UE is referred to as Radio Access Bearer (RAB). Each RAB is subsequently mapped to a service offered from MAC layer. This service is referred to as Logical Channel (LC).

HS-DSCH FP (High Speed Downlink Shared Channel Frame Protocol) is responsible for flow control between Node B and RNC. It determines the capacity that can be granted to RNC for transmitting packets across transport network based on requests obtained from RNC. More specifically, the capacity is requested by CAPACITY REQUEST messages of HS-DSCH FP originating from S-RNC. The permission to transmit certain amount of data over certain period of time is granted by CAPACITY GRANT messages sent from Node B.

Parameters of the protocols are configured by signaling in the Control Plane. This signaling is governed by radio Resource Control (RRC) protocol for the signaling between radio network (S-RNC and UE) and by application protocols, NBAP on the lub interface and RNSAP on the lur interface.

### Mobility Management Functions

### Radio Mobility

Before defining radio mobility, service states of RRC connected mode will be briefly described.

In the Cell_DCH state of the RRC connected mode, dedicated transport channel (DCH) is located to a UE and the UE is known by its serving RNC on a cell level. RRC connection mobility is managed by Active Set Update function.

In the Cell_FACH state of the RRC connected mode, FACH and RACH transport channels can be used for downlink and uplink transmission and cell reselection is used for managing RRC connection mobility. Location of the UE on cell level is reported to the network by Cell Update function.

In the Cell_PCH state of the RRC connected mode, the UE may be reached only via the paging channel (PCH). When wishing to perform a cell reselection while being in Cell_PCH state, the UE may autonomously transit to Cell_FACH state and return to Cell_PCH state after completing the procedure if no other activity has been detected.

In the following, UE identifiers used in the messages of the signaling diagrams of the invention report will be briefly described.
- S-RNTI is an identifier allocated by S-RNC and unique within S-RNC,
- C-RNTI is an identifier allocated by C-RNC and unique within C-RNC,
- U-RNTI is an identifier obtained as a combination of S-RNTI and S-RNC ID and
- D-RNTI is an identifier allocated by D-RNC and unique within D-RNC.

Radio mobility comprises RRC connection mobility functions as defined in the previous paragraphs.

More general, radio mobility comprises a set of mobility management methods, based on knowledge of the UE location on the cell level, that are aimed at achieving nearly optimal utilization of available radio resources and Quality of Service (QoS) as seen by an end user.

### Active Set Update

An Active Set Update function (see 3GPP TSG RAN TS 25.331 "RRC Protocol Specification", V.6.0.1, available at http://www.3gpp.org) modifies the active set of the communication between a UE in Cell_DCH state of the RRC connected mode and UTRAN. The procedure comprises three functions: radio link addition, radio link deletion and combined radio link addition and deletion. The maximum number of simultaneous radio links may be for example set to eight.

Decision on triggering this function is made by RRC in the S-RNC based on certain measurements as described in the sequel. New radio links may be added to the Active Set once the pilot signal strengths of respective base stations (Node Bs) exceed a certain threshold relative to the pilot signal of the strongest member within Active Set.

A radio link may be removed from the active set once the pilot signal strength of the respective base station exceeds certain threshold relative to the strongest member of the Active Set.

The threshold for radio link addition may be chosen to be higher than that for the radio link deletion. Hence, addition and removal events form a hysteresis with respect to pilot signal strengths.

Pilot signal measurements may be reported to the network (S-RNC) from UE by means of RRC signaling. For this and other relevant RRC connection mobility functions CPICH measurements in terms of RSCP or E_{c}/Nₒ may be used (see 3GPP TSG RAN TS 25.215 "Physical Layer Measurements - (FDD)", V.6.0.0, available from http://www.3gpp.org).

Before sending measurement results, some filtering may be performed to average out the fast fading. Typical filtering duration is for example about 200 ms and contributes to the handover delay. Based on filtered measurement results which should hold certain relation to the thresholds for a certain period of time (ΔT), the S-RNC may decide to trigger the execution of one of the procedures of Active Set Update function.

Corresponding signaling across lub/lur interfaces is performed by NBAP/RNSAP procedures mentioned in the previous paragraphs. While executing this function, ACTIVE SET UPDATE and ACTIVE SET UPDATE COMPLETE messages of the RRC protocol may be exchanged between S-RNC and UE. Corresponding NBAP/RNSAP messages may be also exchanged across lub/lur interfaces. An Active Set Update may be applicable for DCH transport channels.

### Hard Handover

A Hard Handover function changes the serving cell of a UE in Cell_DCH state of the RRC connected mode by first deleting the old radio link and then adding a new radio link. Decision on triggering hard handover function is made by RRC in S-RNC based on certain measurements similar as in the previous case. There are several ways to implement this function by Uu interface signaling. For example, RADIO BEARER RELEASE and RADIO BEARER SETUP procedures of the RRC protocol can be exchanged between S-RNC and Node B. Corresponding NBAP/RNSAP messages may be also exchanged across lub/lur interfaces. A typical example of intra-frequency hard handover is Inter Node B serving cell change for HS-DSCH transport channel (see 3GPP TSG RAN TR 25.308 "High Speed Downlink Packet Access (HSDPA): Overall Description Stage 2", V.6.0.0, available at http://www.3gpp.org).

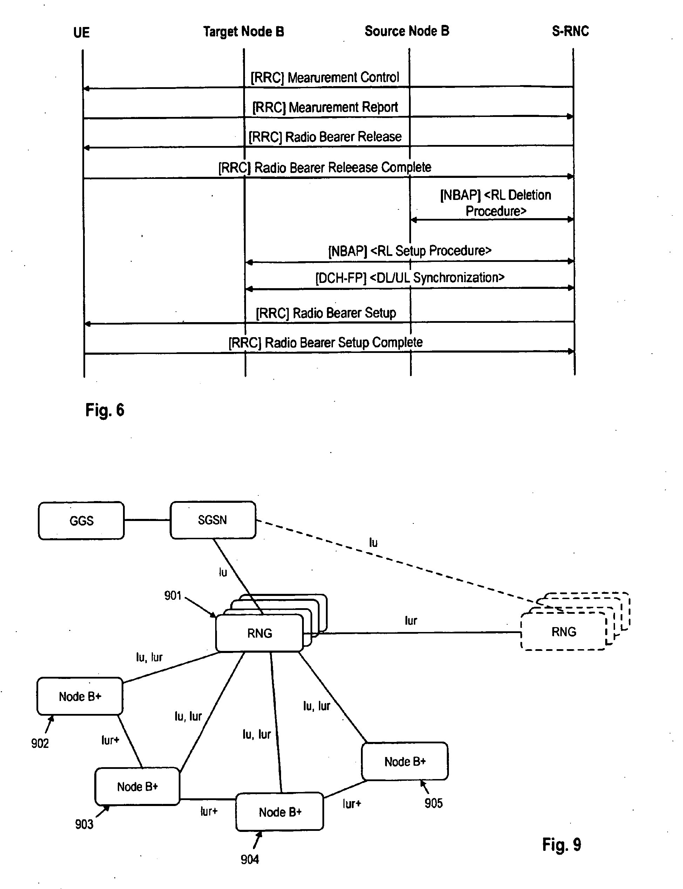

An exemplary signaling diagram for a typical Hard Handover procedure is shown in the Fig. 6. During the Hard Handover, the connection to the old Node B is firstly broken and then a connection to the new Node B is established. It is assumed that both old and new Node B are located in a same RNS controlled by the S-RNC. The signaling will be again divided into three temporal phases: (1) measurement control, (2) Radio Bearer / Radio Link deletion and Radio Link addition and (3) Radio Bearer Setup.

The measurement control phase is analogous to the phase (1) from Fig. 6.

During the second phase, Radio Bearer / Radio Link deletion and Radio Link addition, the Radio Bearer between the S-RNC and the UE corresponding to the connection via the old Node B is deleted first. This may be accomplished by exchanging [RRC] RADIO BEARER RELEASE and [RRC] RADIO BEARER RELEASE COMPLETE messages between the S-RNC and the UE. The corresponding Radio Link is removed by invoking [NBAP] <RL Deletion procedure> between the S-RNC and the old Node B. Finally, a new Radio Link is added between the S-RNC and the new Node B by invoking [NBAP] <RL Setup procedure>. The establishment of the user plane on the lub interface is followed by user plane synchronization during lub [DCH FP] DL/UL Synchronization procedure.

Finally, in the third phase, a new Radio Bearer is Setup between the S-RNC and the UE by exchanging [RRC] RADIO BEARER SETUP and [RRC] RADIO BEARER SETUP COMPLETE messages.

### Inter Node B Serving Cell Change for HSDPA

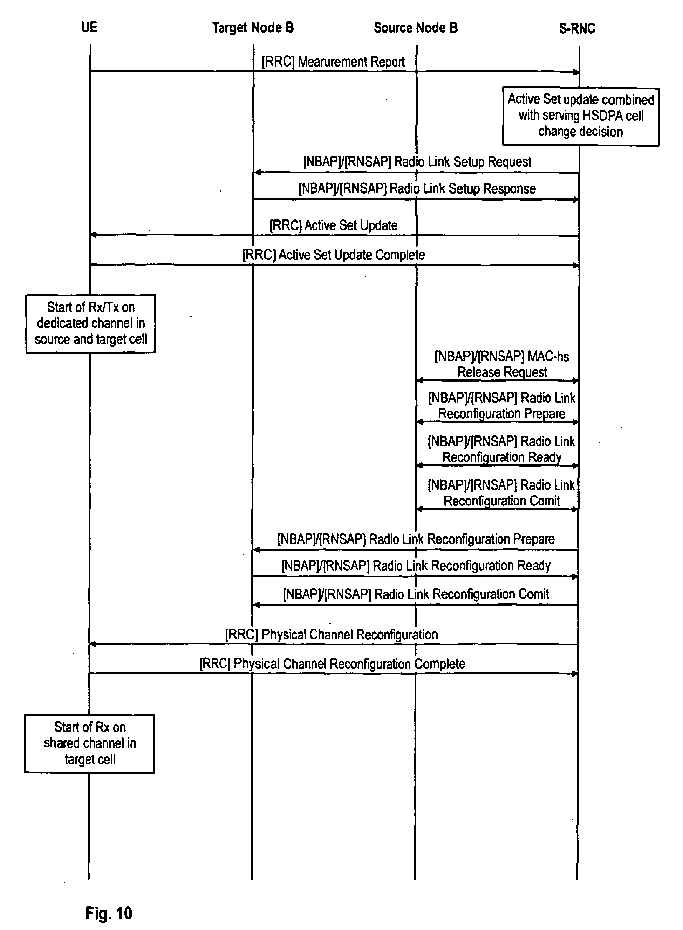

A simplified example of a synchronized inter-Node B serving HS-DSCH cell change procedure according to current UMTS standard 3GPP TR 25.877: High Speed Downlink Packet Access: lub/lur Protocol Aspects", V.5.1.0, available at http://www.3gpp.org, is shown in Fig. 10. In this example it is assumed that the decision on triggering an active set update and cell change procedures is performed simultaneously by the S-RNC.

It may be further assumed that the UE transmits a MEASUREMENT REPORT message to the S-RNC via RRC signaling. The S-RNC determines the need for the combined radio link addition and serving HS-DSCH cell change based on received measurement reports.

As the first step, the SRNC initiates establishment of a new radio link for the dedicated channels to the target Node B by transmitting RADIO LINK SETUP REQUEST message via RNSAP / NBAP protocol. Target Node B confirms the establishment of a radio link by transmitting RADIO LINK SETUP RESPONSE message via RNSAP/NBAP protocol. RRC further transmits an ACTIVE SET UPDATE message to the UE via RRC protocol. The ACTIVE SET UPDATE message comprises the necessary information for establishing dedicated physical channels for the added radio link (but not the HS-PDSCH). When the UE has added the new radio link it returns an ACTIVE SET UPDATE COMPLETE message via RRC protocol. This completes the addition of the new radio link for dedicated channels.

The S-RNC may now carry on with the next step of the procedure, which is the serving HS-DSCH cell change. For the synchronized serving HS-DSCH cell change, both the source and target Node Bs are first prepared for execution of the handover and the cell change at the activation time.

The S-RNC first exchanges signaling messages with source Node B (RADIO LINK RECONFIGURATION PREPARE, RADIO LINK RECONFIGURATION READY and RADIO LINK RECONFIGURATION COMIT via NBAP / RNSAP protocols). It should be noted that RADIO LINK RECONFIGURATION COMMIT message comprises activation time information for source Node B. The same sets of messages are subsequently exchanged with target Node B. The only difference in signaling intended for source and target Node B is that S-RNC informs source Node B to carry out the reset of MAC-hs entity by MAC-hs RELEASE REQUEST message of the NBAP / RNSAP protocol.

Finally, a PHYSICAL CHANNEL RECONFIGURATION message is transmitted to the UE via RRC signaling. This message may comprise activation time information and request a MAC-hs reset at the UE. When the communication is established, the UE responds with PHYSICAL CHANNEL RECONFIGURATION COMPLETE message.

It should be noted that, by the cell change procedure, the serving Node B function is relocated for a single UE from a Source Node B to a Target Node B.

A serving radio resource control entity relocation method is disclosed in WO 03/017686 A. Therein a relocation specific information is transmitted from the serving network element to a desired target network element to establish an operation state between the user equipment and drift network element supporting the desired target network element such that radio resource control is relocated.

### Micro mobility

Micro mobility comprises SRNS relocation procedure as will be described in the following paragraphs.

More general, micro mobility comprises a set of mobility management methods, based on knowledge of UE location on the RNS level, that are aimed at nearly optimal utilization of installed network infrastructure and available radio resources.

SRNS relocation may be defined as a method of moving the S-RNC functionality from one RNC to another RNC in the network.

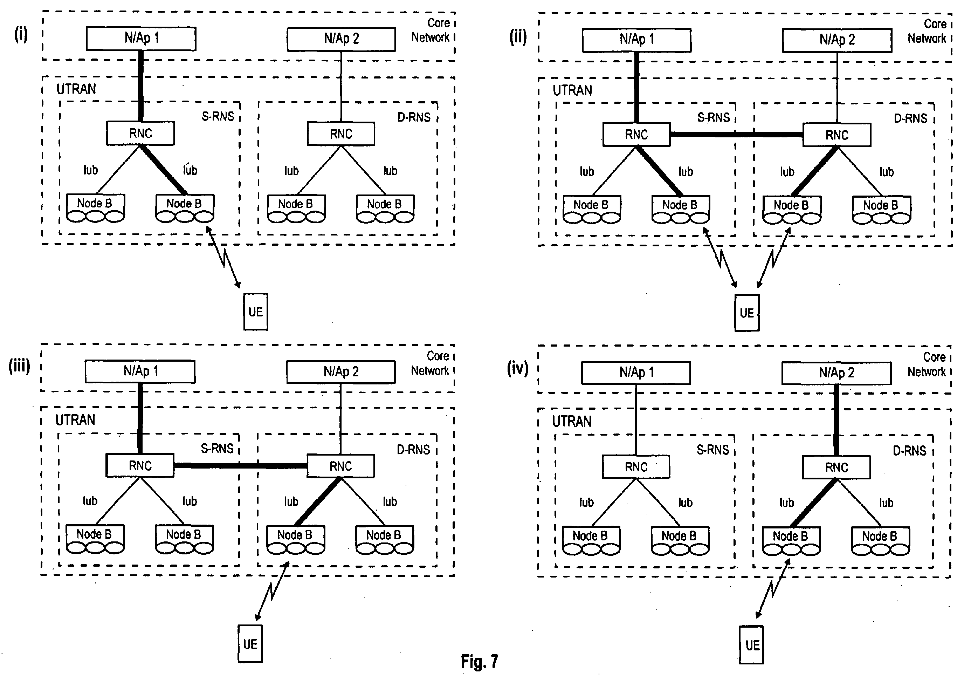

In the following, the exemplary scenario shown in the Fig. 7 is explained. Firstly, the UE maintains a connection over a single Node B within the S-RNS in stage (i). After Active

Set Update is performed, the Node B from D-RNS is added to the Active Set of the UE (ii). After another Active Set Update, the only remaining Node B in the Active Set is the Node B in the D-RNS (iii). It can be noticed that in the stage (iii) the UE is deprived of any connections to Node Bs in the S-RNS thus providing a cause for relocation. Finally, the state of the connections after S-RNS relocation is shown in the stage (iv) of the figure.

It should be noted that the S-RNC is the 'anchor point' of the lu connection on the UTRAN side lu interface is terminated in the SGSN (Serving GPRS Supporting Node) on the CN side. Therefore, SRNS relocation always involves at least one CN node and can be classified into intra-SGSN and inter-SGSN SRNS relocation.

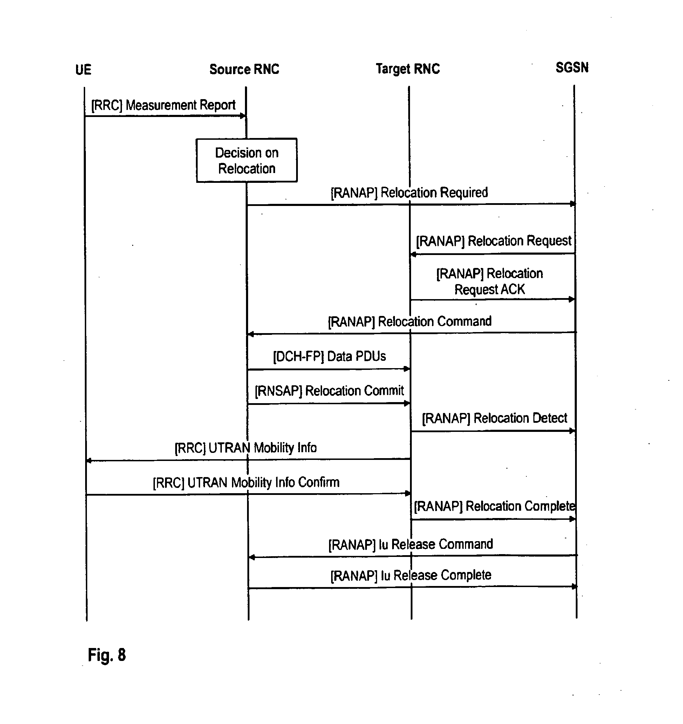

An exemplary signaling diagram of a inter SGSN SRNS relocation procedure (for a ReI99/4 UMTS architecture) is shown in the Fig. 8. The signaling can be divided into five phases: (1) Relocation preparation and resource allocation, (2) Relocation Commit and Relocation Detect, (3) UTRAN Mobility Information, (4) Relocation Complete and (5) lu Release. The old S-RNC is referred to as the Source RNC while the new S-RNC is referred to as the Target S-RNC. Each phase comprises a number of messages that, in turn, encompass several Information Elements (IEs). Relevant IEs are detailed in the explanation.

During the first phase, Relocation preparation and resource allocation, the Source RNC decides to trigger the relocation procedure. Please note that even though the [RRC] MEASUREMENT REPORT message is shown on the figure, the Source RNC decides on relocation based primarily on other criteria, as, for example, the state of the Active Set after previously completed Active Set Update. To trigger the SRNS relocation, the Source RNC sends the [RANAP] RELOCATION REQUIRED message to the SGSN. The message typically contains the Target RNC ID and Relocation Cause ('Resource optimization') IEs, and a set of IEs referred to as Source-to-Target RNC Container. The container contains the set of data being transparent to the CN that are important for operation of the RRC protocol in the Target RNC like UE capabilities, DRNTI (Drift Radio Network Temporal Identity) RAB info and RRC info.

The SGSN then establishes a RAB towards the Target RNC based on already existing PDP Context / QoS attributes, by sending [RANAP] RELOCATION REQUEST message. The message contains Relocation Cause IE, RAB parameters IE and already mentioned Source-to-Target RNC Container. The Target RNC responds by the [RANAP] RELOCATION REQUEST ACK message containing IEs with assigned RAB parameters and a Target-to-Source RNC Container with DRNTI. A new RAB is now successfully established towards the Target RNC.

The SGSN then sends the [RANAP] RELOCATION COMMAND message to the Source RNC. The message contains the list of assigned RAB parameters and the Target-to-Source RNC Container carrying DRNTI. When receiving this message, the Source RNC knows the Target RNC is ready to start receiving data. This means that Source RNC may start forwarding Data PDUs to the Target RNC ([DCH-FP] Data PDUs message).

It should be noted that this action of the Source-RNC is optional and standardized as an improvement of SRNS relocation for real-time services from PS domain for the ReI4 of 3GPP standardization ("seamless" relocation) - see 3GPP TSG RAN TS 25.936 "Handovers for real-time services for PS domain", V. 4.0.1, available at http://www.3gpp.org. The forwarding may be applied if it is indicated in the [RANAP] RELOCATION REQUIRED that the seamless relocation is required (e.g. in the IE standing for Relocation Cause)

In the second phase, Relocation Commit and Relocation Detect, the [RNSAP] RELOCATION COMMIT message is firstly sent from the Source RNC to the Target RNC containing DRNTI, RAB ID and PDCP sequence numbers (sequence numbers are contained only if lossless relocation is required). As a response, the Target RNC sends the [RANAP] RELOCATION DETECT message to the SGSN in order to report that the contact with the Source RNC has now been established over the lur interface.

During the third phase, UTRAN Mobility Information, the UE is firstly updated about the change of the SRNC by the [RRC] UTRAN MOBILITY INFO message that is sent from the SRNC. The message contains IEs with RAB ID, new U-RNTI and, optionally, PDCP sequence numbers on UL (if lossless relocation is required). The UE responds to the SRNC by the [RRC] UTRAN MOBILITY INFO CONFIRM message containing IEs with RAB ID and, optionally, DL PDCP sequence number if lossless relocation is required.

In the fourth phase, Relocation Complete, only the [RANAP] Relocation Complete message is sent from the SRNC (previously Target SRNC) to the SGSN.

Finally, the fifth phase, lu Release, is aimed at releasing the old lu connection established between the SGSN and the old SRNC. The connection is released by exchanging [RANAP] lu RELEASE COMMAND and [RANAP] lu RELEASE COMPLETE messages between the SGSN and the Source RNC. The former message contains the IE Release Cause set to 'Successful Relocation'.

Please note that during the SRNS relocation no new radio links are established since the UE has already been assigned radio resources in the new RNC during e.g. soft handover.

It can be firstly noticed that the SRNS relocation in the legacy architecture may be triggered rather based on knowledge of a set of radio links being configured for a particular UE than based on the measurement reporting. Hence, SRNS relocation may be referred to as a network-evaluated procedure. Secondly, as can be readily deduced from the above explanations, relocation procedure is performed based on a precise knowledge of UE location on the RNS level. Finally, relocation procedure definitely has an immediate impact on the Core Network (CN) meaning that it directly influences lu connection between S-RNC and CN. As a micro mobility procedure, relocation in the networks with legacy architecture is therefore CN-coupled procedure or procedure with involvement of CN.

Identified differences between radio mobility and micro mobility for legacy UTRAN architecture are summarized in the table below. In addition, relative signaling load on network interfaces is considered.

| | **Initiation of functions / procedures** | **Knowledge of UE location** | **Involvement of CN** | **Signaling load on network interfaces (lub/lur/lu)** |
|---|---|---|---|---|
| **Radio mobility** | Mobile- evaluated | Cell level | No | Medium |
| **Micro mobility** | Network- evaluated | RNS level | Yes | Large |

Serving Node B relocation as specified above, comprises moving functionality of radio interface User Plane protocol stack entities from Serving to target Node B, while SRNS relocation is mainly concerned about moving RRC control plane entity (and corresponding lu connection) from Source to Target RNC. These types of relocation may be therefore referred to as User and Control Plane relocation, respectively.

### Radio Resource Management for HSDPA

### Initial Cell and Radio Link Configuration

For the configuration of the HS-DSCH transport channel, basic resource parameters, total power for HS-DSCH and HS-SCCH (High Speed Shared Control Channel for signaling for HSDPA) and number of orthogonal codes for HS-PDSCH (High Speed Physical Downlink Shared Channel) may be set during cell level configuration (NBAP Cell Setup procedure). These pieces of information are signaled as information elements (IEs) of the Cell Setup message (see 3GPP TS 25.922: "Radio Resource Management Strategies", V.6.0.0, available at http://www.3gpp.org). In addition, for e.g. streaming type of services, guaranteed bit rate per MAC-d flow may also be signaled as an IE during NBAP Radio Link Setup procedure over lub. Streaming type traffic is usually transmitted over DCH transport channels, however a HS-DSCH transport channel may be used to provide better radio resource utilization.

### Call Admission Control and Scheduling

Call Admission control (CAC) for HS-DSCH is carried out in the C-RNC (Controlling RNC). Scheduling functionality, located in the MAC-hs, allocates transmission opportunities to the admitted users. The constraint for scheduling is imposed by an amount of resources (total transmission power of HS-DSCH and HS-SCCH and number of codes for HS-PDSCH) allocated for the HSDPA .

Only temporally uniform type of scheduling is based on Round Robin principle. However, for HSDPA it is often the aim to maximize overall system throughput when other temporally non-uniform types of schedulers are used. Typical example is MAX C/I scheduler.

Due to temporally non-uniform scheduling of users assigned to HS-DSCH, it may happen that guaranteed bit rate requested for certain MAC-d flow belonging to the admitted user cannot be fulfilled. To accommodate for this case, reporting of HSDPA Required Power and HSDPA Provided Bit Rate is introduced per MAC-d flow to the CRNC by means of the NBAP common measurement procedure. As a part of load control, CRNC may undertake certain actions to enable proper handling of users demanding fulfillment of certain guaranteed bit rate.

### Common Measurement Reporting and Load Control

The Report Characteristics IE within an [NBAP] COMMON MEASUREMENT INITIATION REQUEST message shows how the reporting is carried out. Roughly, reporting mode can be immediate, common and periodic or event-triggered. It can be concluded that signaling load due to reporting messages is network implementation-specific and that it is the highest in case of periodic reporting.

Upon receiving a report on unsatisfactory Provided Bit Rate for a particular type of service, as the network entity controlling resources for a number of Node Bs/cells, CRNC may perform different actions. For example, it can decide to pre-empt a specific MAC-d flow and signal this to the SRNC by means of the [RNSAP] RADIO LINK PREEMPTION REQUIRED INDICATION message (see 3GPP TS 25.423: "UTRAN lur Interface RNSAP Signalling", V.6.0.0, available at http://www.3gpp.org). After the Radio Link or MAC-d flow pre-emption, SRNC may switch affected user to DCH transport channel.

Alternatively, the CRNC may use common measurement information to allocate more power or codes to the HSDPA users by means of the [NBAP] Cell Reconfiguration procedure. Therefore, it can be noticed that the signaling load in the network in this case is generated also by some actions of the controlling network element that are triggered after receiving measurement reports. Apart from signaling load, certain delay is incurred to reconfigure respective cell, in addition to CRNC processing delay that is implementation specific.

It should be noted that the above explanation concentrating on [NBAP] Common Measurement reporting, [RNSAP] Radio Link Preemption and [NBAP] Cell Reconfiguration/Configuration procedures is exemplary and that similar scenarios may be encountered in all radio access networks employing shared channel access and common measurement reporting to the controlling network element.

### Evolved UMTS UTRAN Architecture

In the following a proposal for an Evolved UMTS UTRAN architecture will be described (see also 3GPP TR 25.897: "Feasibility Study on the Evolution of UTRAN Architecture", V.0.2.0, available at http://www.3gpp.org). In this architecture each of the new network elements may be defined in terms of its control and user plane functions. An overview of the network architecture is given in the Fig. 9.

The RNG (Radio Network Gateway) is used for interworking with the conventional RAN, and to act as a mobility anchor point meaning that once an RNG has been selected for the connection, it is retained for the duration of the call. This includes functions both in control plane and user plane. Further, the RNG provides connectivity to the core network of the mobile communication system.

### Control plane functions

Part of RNG functions is to act as a signaling gateway between the evolved RAN and the CN, and the evolved RAN and Re199/4/5 UTRAN. It has the following main functions:
- lu signaling gateway, i.e. anchor point for the RANAP connection,
   o RANAP (Radio Access Network Application Part) connection termination, including:
      ■ Setup and release of the signaling connections
      ■ Discrimination of connectionless messages
      ■ Processing of RANAP connectionless messages,
   o Relay of idle and connected mode paging message to the relevant NodeB+(s),
- The RNG takes the CN role in inter NodeB+ relocations,
- User plane control and
- lur signaling gateway between NodeB+ and Re199/4/5 RNC

### User plane functions

The RNG is the user plane access point from the CN or conventional RAN to the evolved RAN. It has the following user plane functions:
- User plane traffic switching during relocation,
- Relaying GTP (GPRS tunneling protocol on the lu interface) packets between NodeB+ and SGSN (Serving GPRS Support Node, an element of the CN) and
- lur interworking for user plane

The NodeB+ element terminates all the RAN radio protocols (L1, L2 and L3). NodeB+ functions are studied separately for control plane and user plane.

### Control plane functions

This category includes all the functions related to the control of the connected mode terminals within the evolved RAN. Main functions are:
- Control of the UE,
- RANAP connection termination,
   o Processing of RANAP connection oriented protocol messages
- Control / termination of the RRC connection and
- Control of the initialization of the relevant user plane connections

The UE context is removed from the (serving) NodeB+ when the RRC connection is terminated, or when the functionality is relocated to another NodeB+ (serving NodeB+ relocation). Control plane functions include also all the functions for the control and configuration of the resources of the cells of the NodeB+, and the allocation of the dedicated resources upon request from the control plane part of the serving NodeB+.

### User plane functions

User plane functions include the following:
- Protocol functions of PDCP (Packet Data Convergence Protocol), RLC and MAC and
- Macro Diversity Combining

### Mobility Management

### Radio Mobility

Radio mobility procedures are largely unchanged because they are governed by RRC protocol. Functionality of this protocol in the evolved architecture would remain the same. The only difference is that its termination on the network side would be Serving Node B+.

### SRNS Relocation

Before defining relocation in radio access networks with distributed architecture, let us shortly consider some aspects of relocation. Relocation in legacy radio access network was defined as a procedure by means of which the SRNC functionality is moved from one RNC to another. In a radio access network with distributed architecture, Serving Node B+ may be defined as the Node B+ currently performing all RRC functions for the observed UE. Hence, SRNC relocation in the legacy architecture would correspond to the Serving Node B+ relocation in the radio access network with distributed architecture. In the sequel it will be referred to as serving network element relocation procedure as well. It should be noted that the latter could be used as a more generic term for the legacy SRNS relocation. Therefore, micro mobility in a radio access network with distributed architecture can be defined as serving network element (serving Node B+) relocation.

### Radio Resource Management

### Definition of the Controlling Network Element / Node B+

The controlling network element (CNode B+) is defined as the Node B+ performing radio resource management functions as explained in the "Radio Resource Management for HSDPA" section above. These functions may affect a number of other Node B+s. The set comprised of the CNode B+ and controlled Node B+s will be referred to as radio network subsystem for the evolved architecture.

### Controlling Network Element Relocation

As apparent from the sections above controlling RNC functionality for HSDPA is fundamentally different from the serving RNC functionality. For any distributed radio access network architecture it can be noticed that different network elements (different Node B+s from the reference architecture) may be allocated serving and controlling function, respectively. Subject to certain requirements, controlling network element function for networks employing shared channel access and common measurements may be moved from one network element to another. This procedure will be referred to as controlling network element relocation. The procedure falls rather under radio resource management than under mobility management.

### Increased Signaling Load in Distributed Radio Access Networks

An immediate consequence of the observed difference between legacy and distributed architecture with respect to micro mobility is the frequency of relocations. Generally, frequency of serving network element relocation dominantly depends on two factors: (1) the number of interfaces of the observed element and traffic load on observed interfaces, air interface excluding and (2) the size of coverage area controlled by observed network element.

When examining the exemplary distributed network architecture, it can be readily concluded that the frequency of serving network element relocations increases relative to the frequency of relocations in legacy architecture. Firstly, the number of wired interfaces of Node B+ is tripled (2 lur interfaces and one lu/lur interface) compared to the number of wired interfaces of Node B in the legacy architecture (one lub interface). The number of interfaces compared to RNC in the legacy architecture is approximately equal. However, in distributed architecture the traffic load on lur interfaces is expected to be substantially higher. Secondly, the coverage area controlled by Node B+ is much smaller than the one controlled by legacy RNC.

It can be concluded that frequent relocations induce additional signaling load in the network. It may be desirable that this load is minimized.

### Decreasing Delay of Radio Resource Management Procedures in Distributed Radio Access Networks

As discussed in the "Radio Resource Management for HSDPA" section above, some radio resource management aspects for HSDPA require the interaction of Radio Link and Cell (Re)Configuration, Radio Link Preemption and Common Measurement reporting procedures in legacy network. The architecture of the legacy network, however, is not distributed since one controlling RNC has the responsibility for several Node Bs.

Decreasing delay of the aforementioned HSDPA radio resource management procedures is possible only by signaling flow optimization which is not readily feasible due to relatively simple flows. In distributed radio access networks, however, it may be possible to reduce delay (and decrease signaling load on the interfaces) if both responsibility of controlling and serving RNC were placed in a single enhanced network element.

### SUMMARY OF THE INVENTION

The object of the present invention is to enable controlling network element relocation for distributed radio access network.

The object is solved by the subject matter of the independent claims. Advantageous embodiments of the present invention are subject matters to the dependent claims.

According to one embodiment of the present invention a method for relocating from a controlling base station to another base station within a mobile communication network resource management control functionality of shared channels in a plurality of cells, each cell being controlled by a base station, wherein each of the shared channels is shared by a plurality of mobile terminals within a cell is provided.

According to this embodiment, the method may comprise the steps of receiving information from each reporting base station at the controlling base station, estimating at the controlling base station the signaling load between the controlling base station and each reporting base station or the processing load at each reporting base station and the controlling base station, wherein the estimation is based on said received information, and determining whether to relocate said resource management control functionality for at least a part of said plurality of cells from the controlling base station to a reporting base station, by evaluating the estimated load at the controlling base station.

In case it is determined to relocate resource management control functionality, the controlling base station may select a reporting base station to which resource management control functionality is to be relocated based on the estimated load and may relocate resource management control functionality for at least said part of said plurality of cells from the controlling base station to the selected reporting base station.

According to another embodiment, the resource management control functionality may comprise at least one of the following functions: initial cell and radio link configuration, call admission control and load control.

However, it may not be feasible to relocate resource management control functionality for all cells controlled by the controlling base station to a single new controlling base station in order to ensure an efficient load balancing. Thus, according to a further embodiment, the resource management control functionality for the remaining cells may be maintained at the controlling base station or is relocated to another reporting base station selected by the controlling base station.

Another embodiment of the present invention encompasses different possibilities to provide the controlling network element with information on which its relocation decision may be based on. According to this embodiment the information received from each reporting base station may indicate the quality of service provided to each mobile terminal using a shared channel by the reporting base station. When estimating the for example the signaling load, the controlling base station may estimate same based on the number of mobile terminals for which measurement reports are received from a respective reporting base station.

In a variation of this embodiment, the reported quality of service may indicate either one of or a combination of a provided net bit rate achieved by each mobile terminal using a shared channel within a cell, or a block error rate of data transmitted to the mobile terminals using a shared channel.

The information received by the controlling base station according to another alternative embodiment may indicate the number of mobile terminals using a shared channel under a respective reporting base station. In this case the controlling base station may estimate the signaling load based on the number of mobile terminals indicated in the received information. Thus, the controlling base station may not need to extract the relevant information from the measurement reports but may extract them directly from the provided information.

Another embodiment encompasses an efficient reduction of the signaling load in the access network. In this embodiment the first base station may select the reporting base station as the next controlling base station that reports the largest number of mobile terminals.

As outlined above the method may also balance the processing and/or signaling load within a cell cluster controlled by the controlling base station. According to a further embodiment, the information received at the controlling base station may thus indicate the processing and/or signaling load at the respective reporting base station in order to facilitate load balancing. For example, in case the processing load at the controlling base station is above a predetermined upper processing load threshold and at least one reported processing load value is below a predetermined lower processing load threshold the controlling base station may decide to relocate resource management control functionality. This may have the advantage that frequent relocations may be prevented.

In a variation of this embodiment, the relocation may be triggered only if the relation between the upper and lower threshold is maintained for a predetermined time period.

In the context of this embodiment, it may be further feasible that in another variation a reporting base station to which resource management control functionality for at least a part of said cells is to be relocated is selected to be the station having reported a processing load smaller than the predetermined lower processing load threshold is selected.

According to another embodiment of the present invention the method may further comprise the step of transmitting from the controlling base station to the selected reporting base station a relocation command indicating the relocation of the resource management control functionality for said shared channels of at least a part of said cells.

In a variation, the relocation request message may further comprise cell identifiers of the cells for which resource management control functionality is relocated to the selected reporting base station and an indication whether the selected reporting base station is allowed to perform a subsequent relocation of resource management control functionality.

In a further advantageous improvement, in case the controlling base station relocates resource management control functionality for a part of said cells only, the relocation request message may further comprise cell identifiers of the cells to be controlled by other base stations than said selected reporting base stations.

This embodiment may facilitate splitting resource management control functionality to several designated controlling base stations (currently reporting base stations) as well as a subsequent concentration of resource management control functionality in one controlling base station again.

In a further embodiment the controlling base station may transmit to said selected reporting base station a container comprising information to be used in said estimation step or for load control upon transmitting the relocation request message to said selected base station in case of a lossless relocation of resource management control functionality.

A further embodiment allows informing the base stations not selected to become the controlling base station on the relocation in an advantageous manner. Therefore, the method may further comprise the step of transmitting from the controlling base station a setup request to base stations to which no resource management control functionality for shared channels is relocated, wherein the setup message comprises the cell identifier of the new controlling base station.

According to a further embodiment of the present invention, at least one cell identifier of other base stations to which resource management control functionality of another part of the cells is relocated may be indicated to a reporting base station to which resource management control functionality of a part of the cells is relocated in the relocation request message.

In another embodiment, the reporting base station to which resource management control functionality of a part of cells is relocated may receive information used to estimate the signaling load or processing load from base stations controlling a cell for which said reporting base station has been assigned resource management control functionality from the controlling base station.

In a variation of this embodiment the reporting base station may forward said information to the base station for which the indication to perform the subsequent relocation of resource management control functionality has been received, in case said reporting base station is not allowed to perform a subsequent relocation of access control.

Thereby the controlling base station which has been designated by the previous controlling base station to perform the next relocation procedure may be advantageously provided with information relevant for deciding upon the relocation from cells which are not controlled this controlling base station.

According to another embodiment of the present invention, a relocation request message indicating a reporting base station to which resource management control functionality of at least a part of the cells is to be relocated from the controlling base station is signaled to another controlling base station, in case the controlling base station signaling the relocation request message does not have resource management control functionality for each of said cells. This may have the advantage that even in case resource management control functionality of a cell cluster has been split to several base stations, resource management control functionality for the entire cell cluster may be relocated again.

Moreover the present invention according to a further embodiment provides a base station for relocating to another base station within a mobile communication network resource management control functionality to shared channels in a plurality of cells, each cell being controlled by a base station, wherein each of the shared channels is shared by a plurality of mobile terminals within a cell. The base station may comprise receiving means for receiving information from each reporting base station, and processing means for estimating the signaling load between the base station and each reporting base station or the processing load at each reporting base station and the base station, wherein the estimation is based on said received information. The processing means may be adapted to determine whether to relocate the resource management control functionality for at least a part of said plurality of cells from the base station to a reporting base station, by evaluating the estimated load at the base station, and to select a reporting base station to which resource management control functionality is to be relocated based on the estimated load in case it has determined to relocate resource management control functionality. Moreover the base station may further comprise relocation means for relocating resource management control functionality for at least said part of said plurality of cells from the base station to the selected reporting base station in case the processing means has determined to relocate resource management control functionality.

According to another embodiment, the base station may further comprise means adapted to perform the relocation method according to one of the various embodiments outlined above.

Another embodiment of the present invention is related to a mobile communication system in which resource management control functionality to shared channels in a plurality of cells is relocated from a controlling base station to another base station, each cell being controlled by a base station, wherein each of the shared channels is shared by a plurality of mobile terminals within a cell. The mobile communication system may comprise a plurality of base stations according to the present invention and a plurality of mobile terminals.

Moreover the present invention according to another embodiment provides a computer-readable medium for storing instructions that, when executed on a processor, cause the processor to relocate from a controlling base station to another base station within a mobile communication network resource management control functionality to shared channels in a plurality of cells, each cell being controlled by a base station, wherein each of the shared channels is shared by a plurality of mobile terminals within a cell by receiving information from each reporting base station at the controlling base station, estimating at the controlling base station the signaling load between the controlling base station and each reporting base station or the processing load at each reporting base station, wherein the estimation is based on said received information, and determining whether to relocate the resource management control functionality for at least a part of said plurality of cells from the controlling base station to a reporting base station, by evaluating the estimated load at the controlling base station.

The medium may further store instructions that, when executed on a processor, cause the processor to perform the relocation by selecting at the controlling base station a reporting base station to which resource management control functionality is to be relocated based on the estimated load and relocating resource management control functionality for at least said part of said plurality of cells from the controlling base station to the selected reporting base station, in case it is determined to relocate resource management control functionality,.

Moreover the computer-readable medium may further store instructions that, when executed on a processor, cause the processor to perform the relocation procedure according to one of the various embodiments above.

### BRIEF DESCRIPTION OF THE FIGURES

In the following the present invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows an architectural overview of a Serving and Drift Network Subsystem,
- **Fig. 4**: shows an User Plane protocol stack architecture for HSDPA in a ReI99/4/5 UTRAN architecture,
- **Fig. 5**: shows an User Plane protocol stack architecture for HSDPA in the Evolved UTRAN architecture,
- **Fig. 6**: shows a signaling diagram for a Hard Handover procedure in a ReI99/4/5 UTRAN architecture,
- **Fig. 7**: shows an exemplary serving radio network subsystem (SRNS) relocation in a ReI99/4/5 UTRAN architecture,
- **Fig. 8**: shows an exemplary signaling diagram of a serving radio network subsystem (SRNS) relocation of Fig. 7 in a ReI99/4/5 UTRAN architecture,
- **Fig. 9**: shows an evolved UTRAN architecture,
- **Fig. 10**: shows a signaling diagram of an Inter-Node B serving cell change for HSDPA a ReI99/4/5 UTRAN architecture,
- **Fig. 11**: shows a signaling diagram for an exemplary controlling Node B+ relocation scenario according to an embodiment of the present invention,
- **Fig. 12**: shows a signaling diagram for an exemplary controlling Node B+ relocation scenario in which resource management control functionality is split to several SNode B+s according to an embodiment of the present invention,
- **Fig. 13**: shows a signaling diagram for an exemplary controlling Node B+ concentration procedure according to an embodiment of the present invention,
- **Fig. 14a, 14b**: show an exemplary controlling Node B+ relocation scenario according to an embodiment of the present invention,
- **Fig. 15a, 15b**: show an exemplary controlling Node B+ relocation scenario in which resource management control functionality is split to several SNode B+s according to an embodiment of the present invention,
- **Fig. 16a, 16b**: show an exemplary controlling Node B+ concentration procedure according to an embodiment of the present invention,
- **Fig. 17a, 17b**: show another exemplary controlling Node B+ concentration procedure according to an embodiment of the present invention, and

- **Fig. 18a, 18b**: show another exemplary controlling Node B+ relocation scenario in which resource management control functionality is split to several SNode B+s according to an embodiment of the present invention.

### DETAILED DESCRIPTION OF THE INVENTION

The following paragraphs will describe various embodiments of the present invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the present inventions to such systems.

The additional "+" sign appended to the protocols or network elements are intended to denote that these protocols and network elements may have an enhanced functionality compared to the corresponding legacy UMTS architecture, i.e. denote protocols that may be adapted to the Evolved UTRAN architecture. The additional "+" sign should however not be understood as a limitation of the principles and ideas of this invention.

Also the detailed explanations given in the Technical Background section above are merely intended to better understand the mostly UMTS specific exemplary embodiments described in the following and should not be understood as limiting the present invention to the described specific implementations of processes and functions in the mobile communication network.

Generally, the principles of the present invention may be applicable to any kind of mobile communication systems employing a distributed architecture, for example to communication systems based on the beyond-IMT-2000 framework.

One aspect of the present invention is to enable controlling network element relocation for distributed radio access network and design corresponding procedure.

For example, in the legacy UMTS UTRAN, controlling network element relocation is impossible - which follows from the definition of relocation cause in 3GPP TS 25.413: "UTRAN lu Interface RANAP Signaling", (see Version 6.1.0, available at http://www.3gpp.og) - and SRNS relocation is introduced as a micro mobility management procedure.

As will be explained in greater detail in the following sections, controlling network element relocation may be performed for several users simultaneously, which is a difference with respect to normal SRNS relocation, which is performed per single user. Hence, increase in signaling load due to controlling network element relocation will not be unacceptably high.

Obviously, by relocating controlling network element function to one of the serving network elements, radio resource management procedures for HSDPA as described in above or another radio access technology with similar features, may be carried out for a number of users in a single network element. This may contribute to decreasing the delay of the procedures and to decreasing overall signaling load in the network.

It can be readily recognized that, by applying controlling network element relocation, load distribution between network elements is possible. Moreover, by controlling network element relocation no impact on Uu interface is made.

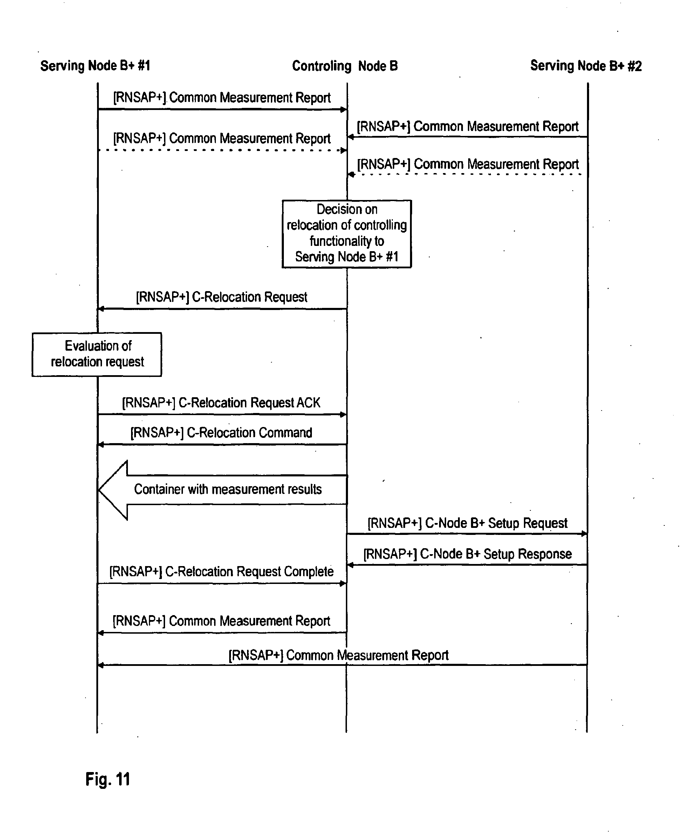

Fig. 11 shows a signaling diagram for an exemplary controlling Node B+ relocation scenario. In this example it is assumed that CNode B+ (Controlling Node B+) controls two neighboring Node B+s (Serving Node B+ #1 and Serving Node B+ #2). These two serving Node B+s may perform serving network element functionality for users that are allocated to respective cells. They may transmit measurement reports to the CNode B+. For this purpose for example [RNSAP+] COMMON MEASUREMENT REPORT messages may be used.

After a while, CNode B+ may decide to trigger controlling network element relocation to the SNode B+ #1. The SNode B+ #1 may be informed on this decision, for example using a [RNSAP+] C-RELOCATION REQUEST message. This message may comprise a Relocation Cause IE, which may for example be set to 'controlling network element relocation', and Source-to-Target Node B+ container.

After having been informed on the CNode B+'s decision, SNode B+ #1 may evaluate the request and may decide whether to accept relocation or not. If the decision is positive, SNode B+ #1 may inform CNode B+ its decision, for example by using a [RNSAP+] C-RELOCATION REQUEST ACK message. As a next step, the CNode B+ may send a message comprising information on the cells to be controlled by the SNode B+ #1 to same. This may for example be accomplished by sending a [RNSAP+] C-RELOCATION COMMAND message which may comprise for example cell identifiers (cell IDs) of Node B+s to be controlled by the newly selected controlling element. In addition, a container with measurement results may be transferred from the CNode B+ to the SNode B+ #1.

For example by means of a [RNSAP+] CNode B+ SETUP REQUEST message SNode B+ #2 may be informed by CNode B+ on the new controlling network element (SNode B+ #1) in order to redirect e.g. measurement reporting to that element. A [RNSAP+] CNode B+ SETUP REQUEST message may for example comprise an IE with the cell ID of SNode B+ #1. A confirmation from the SNode B+ #2 may be transmitted to the CNode B+, for example in a [RNSAP+] CNode B+ SETUP RESPONSE message. Finally, the completion of the relocation is confirmed by using for example a [RNSAP+] C-RELOCATION COMPLETE message.

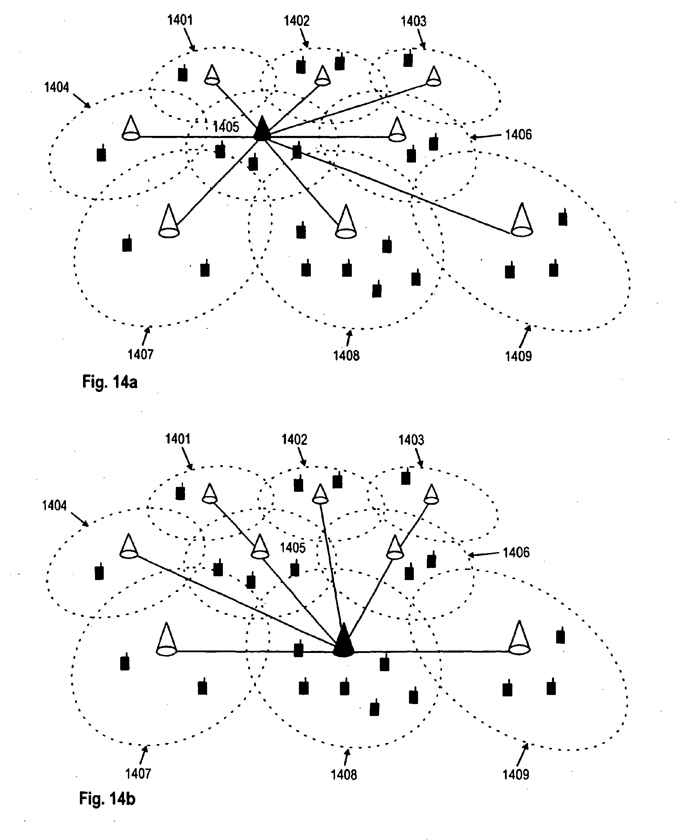

As has become apparent from this exemplary signaling diagram, a situation has been described in which the CNode B+ decides to relocate resource management control functionality for all cells, i.e. Node B+s controlled by the respective CNode B+. This decision may for example be feasible in situations as illustrated in Fig. 14a and 14b. In Fig. 14a it is assumed that radio cells 1401 to 1409 are each controlled by a Node B+, indicated by cones.

The Node B+ controlling cell 1405 performs resource management control functionality for all cells 1401 to 1409 (indicated by the filled cone) in Fig. 14a i.e. is the CNode B+. Further, the connection from the SNode B+s (cones) of cells 1401-1404,1406-1409 to the CNode B+ in cell 1405 are intended to indicate the measurement reports transmitted to the CNode B+ and the signaling of other information related to resource management control functionality.

The density of stylized mobile terminals within a cell indicates a number of terminals using a shared channel within each of the cells. For example each stylized terminal may indicate 10 HSDPA users in the cell.

When considering the situation as shown in Fig. 14a it is noted that many measurement reports may have to be transmitted from SNode B+ in cell 1408 to CNode B+ in cell 1405
- indicated by the larger number of stylized terminals. Therefore, CNode B+ in cell 1405 may decide to relocate resource management control functionality to the SNode B+ in cell 1408 and may perform a relocation procedure as described in reference to Fig. 11 above. In this exemplary embodiment of the present invention outlined with respect to Fig. 14a and 14b, the Node B+ of cell 1405 corresponds to the Controlling Node B+ in the signaling diagram of Fig. 11, the Node B+ of cell 1408 to the Serving Node B+ #1, and any of the remaining Node B+s to Serving Node B+ #2.

Thus, after relocation a scenario as shown in Fig. 14b may be the result. In Fig. 14b, the Node B+ in cell 1407 performs CNode B+ functions, i.e. controls resource management, while the SNode B+s of cells 1401-1407 and 1409 now provide the new CNode B+ in cell 1405 with measurement reports.

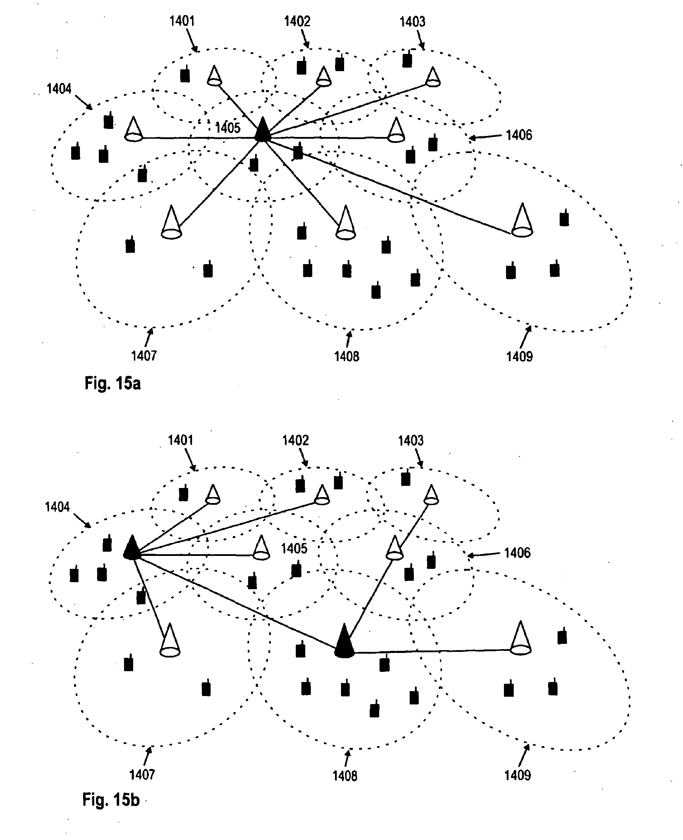

In Fig. 15a a similar initial situation as in Fig 14a is illustrated. Again the signaling load between the CNode B+ in cell 1405 and the SNode B+ in cell 1407 is high due to a high number of users of shared channels controlled by CNode B+ in cell 1405. In this exemplary embodiment, also the SNode B+ of cell 1404 causes a fairly high signaling load. Probably, in addition SNode B+ of cell 1407 also reported a relatively high processing load. In this exemplary scenario, the CNode B+ in cell 1405 may thus decide to split resource management control functionality for cells 1401 to 1409 to the SNode B+s of cells 1404 and 1408.

Though in this exemplary embodiment of the present invention as well as the oher exemplary embodiments that will be outlined in the following mainly refer to a high signaling load between a SNode B+ and a CNode B+ being a criterion for triggering a relocation, it is noted that also other criteria, as for example the processing load on the SNode B+s and CNode B+s, may be taken into account when deciding on whether to perform a relocation or not. The decision may be based on either one of the criteria or a combination thereof. The latter for example may be feasible in order to provide an adequate tradeoff between signaling load balancing on the interfaces between Node B+s and processing load control considering the processing load of individual Node B+s in the controlled cell cluster 1401 to 1409.

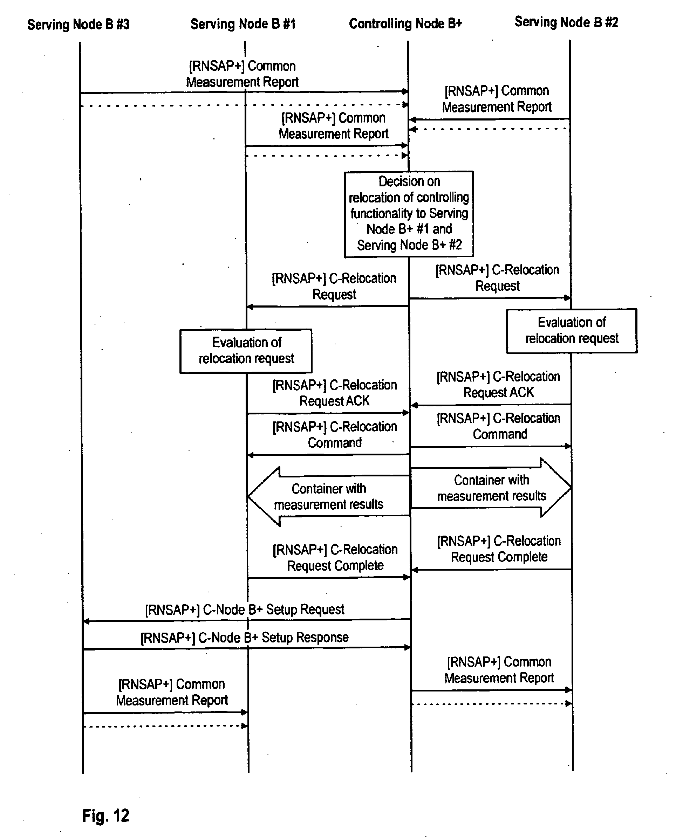

Fig. 12 shows a signaling diagram of a relocation procedure in which resource management control functionality is split between two SNode B+s. The Controlling Node B+ may decide to split the resource management control functionality for example in a scenario outline with reference to Fig. 15a above.

In this case the CNode B+ may send a request for relocation to both, Serving Node B+ #1 and Serving Node B+ #2. For this purpose, two [RNSAP+] C-RELOCATION REQUEST messages may be transmitted by CNode B+.

After having been informed on the CNode B+'s decision, SNode B+ #1 and SNode B+ #2 may evaluate the request and may decide whether to accept relocation or not. If the decision is positive, and may inform CNode B+ on their decision, for example by using a [RNSAP+] C-RELOCATION REQUEST ACK message.

In a next step, the CNode B+ may send a message comprising information on the cells to be controlled by the SNode B+ #1 and SNode B+ #2 to same. This may for example be accomplished by sending a [RNSAP+] C-RELOCATION COMMAND message which may comprise for example identifiers (IDs) of Node B+s to be controlled by the newly selected controlling element. In addition, a container with measurement results may be transferred from the CNode B+ to the SNode B+ #1.

Moreover, according to a further embodiment of the present invention the message transmitted by the CNode B+ may further comprise an indication which of the two SNode B+s is allowed to perform the next subsequent relocation procedure. This may be feasible in case a further split of resource management control functionality is not desired.

Hence, only one of the designated new CNode B+s may be allowed to either reunite the resource management control functionality for all cells or the split it again. Thus, it may be further desirable, it the SNode B+ designated to perform the next relocation procedure (e.g. SNode B+ #1) is also provided with all cell IDs for which control has been split, in order to have information on the "cell cluster" in which resource management control functionality is relocated amongst the Node B+s.

Also the designated new CNode B+ (e.g. SNode B+ #2) not allowed to perform a relocation of resource management control functionality may provided with information identifying the other designated CNode B+ (e.g. SNode B+ #1), for example by including the cell ID of SNode B+ #1 in the [RNSAP+] C-RELOCATION COMMAND message. Thus, SNode B+ #2 may forward the measurement results or resource management control functionality related signaling received after relocation to SNode B+ #1 in order to support its decision on relocating resource management control functionality.

Next, for example by means of a [RNSAP+] CNode B+ SETUP REQUEST message SNode B+ #3 may be informed by CNode B+ on the new controlling network element (e.g SNode B+ #1) in order to redirect e.g. measurement reporting to that element.

A [RNSAP+] CNode B+ SETUP REQUEST message may for example comprises an IE with the cell ID of SNode B+ #1. A confirmation from the SNode B+ #3 may be transmitted to the CNode B+, for example in a [RNSAP+] CNode B+ SETUP RESPONSE message. Finally, the completion of the relocation is confirmed by using for example a [RNSAP+] C-RELOCATION COMPLETE message.

Similarly as for SNode B+ #3, all other Node B+s in the controlled "cell cluster" not designated to become a new CNode B+, may be informed on the relocation a new controlling network element (i.e. SNode B+ #1 or SNode B+ #2).

Apparently, the Controlling Node B+ may correspond to the CNode B+ in cell 1405 of Fig. 15a, while Serving Node B+ #1 may correspond to SNode B+ in cell 1408 and Serving Node B+ #2 may correspond to SNode B+ in cell 1404. Serving Node B+ #3 in Fig. 12 may be understood as an example of any of the SNode B+s in the remaining cells.

The resulting scenario after a relocation and split of resource management control functionality is outlined in more detail with reference to Fig. 15b. As has become apparent from the signaling procedure shown in Fig. 12, Fig. 15b shows two new CNode B+s in cells 1404 and 1408 now performing resource management control functionality for their "cell cluster" comprising cells 1401, 1402, 1404, 1405 and 1407 and 1403, 1406, 1408 and 1409 respectively. The new "cell clusters" are also indicated by the stylized interconnections between the new CNode B+s and their associated SNode B+. The link between the CNode B+ in cell 1404 and the CNode B+ in cell 1408 may be used to forward the resource management control functionality related signaling, as for example measurement reports, from the CNode B+ of call 1404 to CNode B+ of cell 1408, which has been designated to perform the next relocation procedure.

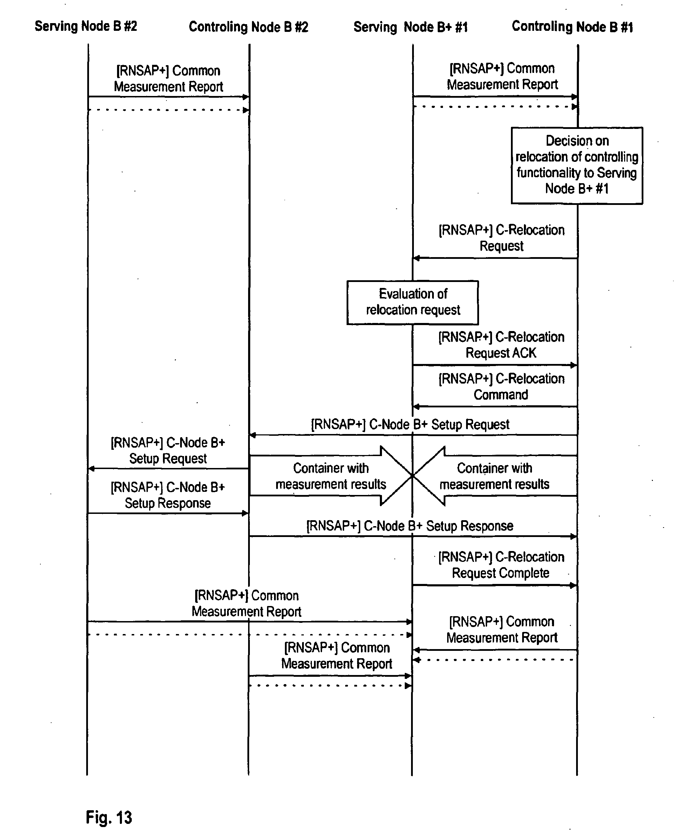

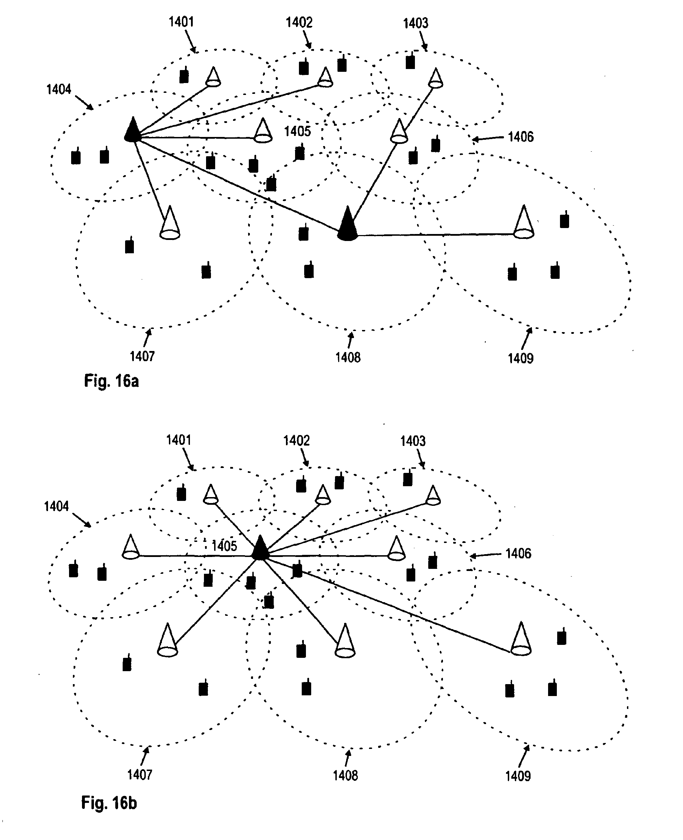

Fig. 13, Fig. 16a and Fig. 16b relate to an exemplary embodiment showing a relocation procedure in a situation in which more than one controlling network element exists, i.e. in situations in which a split of resource management control functionality has occurred before. Though the embodiments related to a split and concentration of resource management control functionality are described with respect to a split of resource management control functionality to two new CNode B+s, it should be noted that a split and concentration of resource management control functionality is also possible to/for more than two CNode B+s in an essentially similar manner as for two CNode B+s.

In Fig. 16a essentially the same scenario as for Fig. 15b is shown. Resource management control functionality has been split to two CNode B+s, the Node B+s of cells 1404 and 1408. In contrast to Fig. 15b, the number of HSDPA users in cells 1404 and 1408 have been reduced significantly. For exemplary purposes it may be further assume that the initially high processing load at the CNode B+ in cell 1408 is still present. Further, this CNode B+ has been designated to perform the next relocation procedure. Also the number of HSDPA users in cell 1405 has increased again.

Thus in order to reduce its own processing load and to relax the signaling load between the CNode B+ in cell 1404 and the SNode B+ in cell 1405, the CNode B+ in cell 1408 is assumed to be allowed to relocate resource management control functionality to the SNode B+ of cell 1405.

An exemplary signaling diagram for this reunion of resource management control functionality according to another embodiment of the present invention is shown in Fig. 13. Upon deciding at Controlling Node B+ #1 (corresponding to the CNode B+ in cell 1408) to relocate resource management control functionality to Serving Node B+ #1 (corresponding to the SNode B+ in cell 1405), essentially the same relocation request, evaluation, acknowledgement and command process as outlined with reference to Fig. 11 may be performed.

After transmitting the [RNSAP+] C-Relocation command, the Controlling Node B+ #1 may inform the other Controlling Node B+ #2 about the relocation, for example by means of a [RNSAP+] C-Node B+ Setup Request. Upon receiving this request message from Controlling Node B+ #1, Controlling Node B+ #2 may forward the request to its controlled SNode B+s (represented by Serving Node B+ #2) in order to inform same on the upcoming relocation. Again this setup message indicates for example by means of a cell ID the new selected CNode B+ (Serving Node B+ #1).

Upon receiving the setup request from Controlling Node B+ #1, Controlling Node B+ #2 may forward a container with measurement results (and/or other resource management control functionality related information) to Serving Node B+ #1. Also Controlling Node B+ #1 may do so. Finally, the Serving Node B+ #1 may complete the relocation procedure, for example by sending a [RNSAP+] C-Relocation Request Complete message to Controlling Node B+ #1.

As for Fig. 12, also for Fig. 13 the information that may be comprised in the individual messages exchanged essentially corresponds to those as outlined with respect to Fig. 11.

After having performed the relocation procedure shown in Fig 13, a scenario as shown in Fig. 16b may result. Having performed the relocation, resource management control functionality is concentrated again and the new CNode B+ in cell 1405 will control resource management.

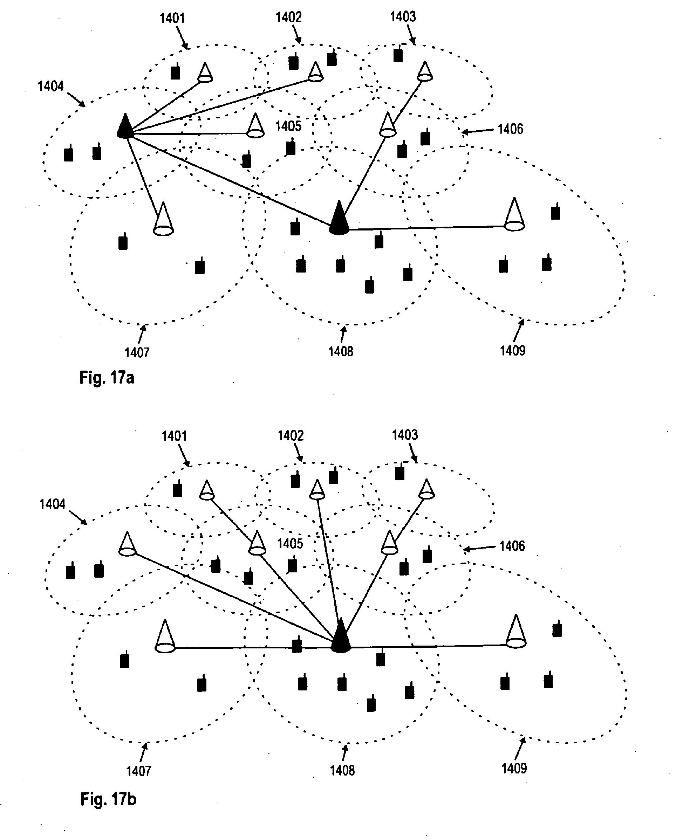

Another possible situation illustrated in Fig. 17a and 17b may be that after a split of resource management control functionality, the CNode B+ designated to perform the next relocation (here CNode B+ in cell 1408) acquires the part of resource management control functionality which has been designated to the CNode B+ in cell 1404. In Fig. 17a an initial situation in which the processing load at the CNode B+ in cell 1408 is low and in which the number of HSDPA users in cell 1404 has been significantly reduced may be assumed for exemplary purposes. Further, the signaling load imposed by relocation resource management control functionality to another SNode B+ than the CNode B+s may be assumed to be increased, this procedure may not be feasible. However, the CNode B+ in cell 1408 may decide to acquire the resource management control functionality for the cells currently controlled by CNode B+ of cell 1404, for example, because it is preferred to have one controlling network element within the cell cluster 1401 to 1409.

In this situation the signaling procedure as shown in Fig. 13 may be used except that Controlling Node B+ #1 and Serving Node B+ #1 may be understood to correspond to each other, such that all signaling between these two entities may be omitted. Also all signaling from the remaining entities shown in Fig. 13 directed to Controlling Node B+ #1 and Serving Node B+ #1 may be understood as to be directed to Controlling Node B+ #1 only.

As shown in Fig 17b, after relocation the resource management control functionality for all cells of the cell cluster 1401 to 1409 remains at the CNode B+ of cell 1408 after relocation.

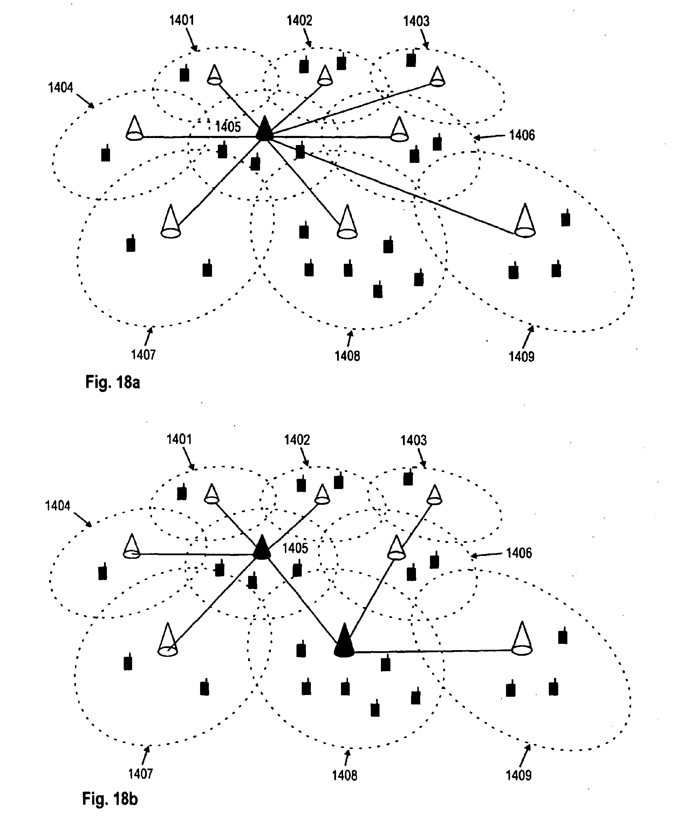

A further situation of interest that may occur is illustrated in Fig. 18a and 18b. According to the embodiment shown in these two figures, a split of resource management control functionality is shown where the original CNode B+ in cell 1405 only relocates a part of the resource management control functionality to the SNode B+ of cell 1408 while it maintains the remaining part of resource management control functionality. For example in case the signaling load between the CNode B+ in cell 1405 and SNode B+ in cell 1408 is high due to many HSDPA users in cell 1408, the CNode B+ may decide to relocate parts of the resource management control functionality to the SNode B+ in cell 1408 to reduce the signaling load.

A signaling diagram which may illustrate the signaling required for this partial relocation of resource management control functionality according to the example of Fig. 18a and Fig. 18b may correspond to the one shown in Fig. 12, except that Serving Node B+ #1 and Controlling , Node B+ #1 would be one and the same entity. Hence, all signaling between Serving Node B+#1 and Controlling Node B+ #1 in Fig. 12 may be omitted. Also all signaling directed to Serving Node B+ #1 and Controlling Node B+ #1 from the remaining entities indicated in Fig. 12 may be understood as to be transmitted to the Controlling Node B+ #1.

It has been previously outlined that measurement results may be sent to the SNode B1+ in a separate container, which may be especially feasible if lossless relocation is desired. According to a further embodiment of the present invention, if a lossless relocation is desired, the value of the IE Relocation Cause may for example be set to 'lossless controlling network element relocation'. If no lossless relocation is desired, the container with measurement results illustrated in the various exemplary signaling diagrams outlined above need not to be transmitted.

Moreover, the container - if transmitted - may comprise measurement results reported to previous controlling network element separated by UE IDs (e.g. S-RNTIs) for each user and by Node B+'s cell ID for each reporting network element. Of course, the results reported by SNode B+ #1 need not to be contained in the container.

As explained in the previous section, measurement results may be sent to the SNode B+ #1 in the separate container. The container size and accuracy of the transferred results can be regulated by configurable time span for which the results are sent.

Some decision criteria which may trigger a relocation of resource management control functionality have been outlined above. According to one embodiment of the present invention, the CNode B+ may employ different decision criteria for triggering relocation. For example, it may decide to trigger the procedure based on number of UEs for which the measurement reporting is done by respective serving network elements. In case of immediate or event-driven type of reporting this may not be so reliable. In that case, the CNode B+ may use some information possibly signaled separately by other network elements, e.g. number of UEs accessing HS-DSCH or some load measure of respective network elements.

It may occur that more than one network element fulfill a particular criterion for relocating the controlling function. In the following the scenario with two Node B+es fulfilling the criterion will be considered. In this scenario, the current CNode B+ may decide to divide the RNS into two parts, with each of them being controlled by Node B+es fulfilling the criterion. In this case 'split' relocation from currently controlling Node B+ to two aforementioned Node B+es may be applied.

According to another embodiment of the present invention, the decision to trigger a further controlling network element relocation may be left to only one of the designated new CNode B+s to avoid indefinite splitting of the cell cluster or radio network subsystem. In this case the other CNode B+s may be informed of any triggered relocations. Measurement results may be forwarded from the latter to the CNode B+ designated to trigger the next relocation.

According to another embodiment, the following guidelines may be considered when designing a signaling procedure for relocations in which resource management control functionality is split. The [RNSAP+] C-RELOCATION COMMAND message may be transmitted to both target selected SNode B+s from current CNode B+ and the message may comprise Cell IDs of newly selected controlling base stations, cell IDs of the cells to be controlled by each of the newly selected network elements as well as indication on which one of them may decide on next relocations. In case of "lossless" relocation, measurement results relevant for newly selected controlling cells may always be forwarded in the container to the newly selected CNode B+s. Further, in order to redirect measurement reports, messages like [RNSAP+] CRNC SETUP REQUEST/RESPONSE may be exchanged between previous CNode B+ and all affected Node B+s apart from newly selected new CNode B+s. These messages may comprise Cell IDs of newly selected CNode B+s.

A further embodiment, related to criteria for triggering relocation when the processing load of certain network elements becomes too high, may depend on user mobility that in turn may cause frequent changes in user population. Also in situations in which processing load as well as signaling load should be controlled simultaneously, problems as outlined in the following may occur.

The two exemplary situations mentioned above may lead to relatively frequent triggering of controlling network element relocation procedure described above.

For example when considering situations in which processing load as well as signaling load should be controlled simultaneously, a CNode B+ having a high signaling load may tend to relocate resource management control functionality to a SNode B+ having a lower processing load.

However, this SNode B+ may have a low signaling load due to only few HSDPA users in the cell, while the processing load at CNode B+ may result from many HSDPA users in the respective cell. Thus, in case CNode B+ performs a relocation of resource management control functionality to the SNode B+, the signaling load between these may increase, which may trigger a new relocation of resource management control functionality back to the original CNode B+.

Frequent shifts of the controlling network element role ("ping-pong" effect) may be overcome by introducing two different thresholds: one with respect to the processing load in currently controlling network element and another with respect to the processing loads reported by other (controlled network elements). Only if a particular threshold criterion is fulfilled, for example the processing load at a reporting SNode B+ is below a predetermined threshold, and/or the signaling load is above a predetermined tolerable threshold, relocation may be triggered.

In more detail, for triggering relocation procedure it may be required that the processing load in the CNode B+ is above an upper processing load threshold and that processing loads and/or signalling loads reported by other network elements are below predetermined lower processing threshold during a predetermined period of time.

In order to select the initial CNode B+ within a cell cluster or radio network subsystem, a further embodiment of the present invention proposes that the controlling network element is selected by the operator before starting network operation. Further shifting of the relocation function may then be performed according to the various embodiments as set forth in the previous paragraphs.

Another embodiment of the present invention relates to the implementation of the above described various embodiments using hardware and software. It is recognized that the various above mentioned methods as well as the various logical blocks, modules, circuits described above may be implemented or performed using computing devices, as for example general purpose processors. The various embodiments of the present invention may also be performed or embodied by a combination of these devices.

Further, the various embodiments of the present invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for relocating from a controlling base station to another base station within a mobile communication network resource management control functionality of shared channels in a plurality of cells, each cell being controlled by a base station, wherein each of the shared channels is shared by a plurality of mobile terminals within a cell, the method comprising the steps of:
receiving information from each reporting base station at the controlling base station,
estimating at the controlling base station the signaling load between the controlling base station and each reporting base station or the processing load at each reporting base station and the controlling base station, wherein the estimation is based on said received information,
determining whether to relocate said resource management control functionality for at least a part of said plurality of cells from the controlling base station to a reporting base station, by evaluating the estimated load at the controlling base station,
in case it is determined to relocate resource management control functionality,
selecting at the controlling base station a reporting base station to which resource management control functionality is to be relocated based on the estimated load and
relocating resource management control functionality for at least said part of said plurality of cells from the controlling base station to the selected reporting base station.

2. The method according to claim 1, wherein the resource management control functionality comprises at least one of initial cell and radio link configuration, call admission control and load control.

3. The method according to claim 1 or 2, wherein the resource management control functionality for the remaining cells is maintained at the controlling base station or is relocated to another reporting base station selected by the controlling base station.

4. The method according to one of claims 1 to 3, wherein the information received from each reporting base station indicates the quality of service provided to each mobile terminal using a shared channel by the reporting base station, and
in the step of estimating, the controlling base station estimates the signaling load based on the number of mobile terminals for which measurement reports are received from a respective reporting base station.

5. The method according to claim 4, wherein the reported quality of service indicates either one of or a combination of a provided net bit rate achieved by each mobile terminal using a shared channel within a cell, or a block error rate of data transmitted to the mobile terminals using a shared channel.

6. The method according to one of claims 1 to 3, wherein the information received by the controlling base station indicates the number of mobile terminals using a shared channel under a respective reporting base station, and
in the step of estimating, the controlling base station estimates the signaling load based on the number of mobile terminals indicated in the received information.

7. The method according to one of claims 4 to 6, wherein the first base station selects the reporting base station as the next controlling base station that reports the largest number of mobile terminals.

8. The method according to one of claims 1 to 3, wherein the information received at the controlling base station indicates the processing load at the respective reporting base station, and
it is determined to relocate resource management control functionality in case the processing load at the controlling base station is above a predetermined upper processing load threshold and at least one reported processing and/or signaling load value is below a predetermined lower load threshold.

9. The method according to claim 8, wherein the relocation is triggered if the relation between the upper and lower threshold is maintained for a predetermined time period.

10. The method according to claim 8 or 9, wherein in the step of selecting the reporting base station to which resource management control functionality for at least a part of said cells is to be relocated, the reporting base station having reported a processing and/or signaling load smaller than the predetermined lower load threshold is selected.

11. The method according to one of claims 1 to 10, further comprising the step of transmitting from the controlling base station to the selected reporting base station a relocation command indicating the relocation of the resource management control functionality for said shared channels of at least a part of said cells.

12. The method according to claim 11, wherein the relocation request message further comprises cell identifiers of the cells for which resource management control functionality is relocated to the selected reporting base station and an indication whether the selected reporting base station is allowed to perform a subsequent relocation of resource management control functionality.

13. The method according to claim 12, wherein in case the controlling base station relocates resource management control functionality for a part of said cells only, the relocation request message further comprises cell identifiers of the cells to be controlled by other base stations than said selected reporting base stations.

14. The method according to one of claims 11 to 13, further comprising the step of transmitting from the controlling base station to said selected reporting base station a container comprising information to be used in said estimation step or for load control upon transmitting the relocation request message to said selected base station in case of a lossless relocation of resource management control functionality.

15. The method according to one of claims 11 to 14 further comprising the step of transmitting from the controlling base station a setup request to base stations to which no resource management control functionality for shared channels is relocated, wherein the setup message comprises the cell identifier of the new controlling base station.

16. The method according to one of claims 1 to 15, further comprising the step of indicating to a reporting base station to which resource management control functionality of a part of the cells is relocated, at least one cell identifier of other base stations to which resource management control functionality of another part of the cells is relocated in the relocation request message.

17. The method according to one of claims 11 to 16, further comprising the step of receiving at said reporting base station to which resource management control functionality of a part of cells is relocated, information used to estimate the signaling load or processing load from base stations controlling a cell for which said reporting base station has been assigned resource management control functionality from the controlling base station.

18. The method according to claim 17, further comprising the step of forwarding from said reporting base station said information to the base station for which the indication to perform the subsequent relocation of resource management control functionality has been received, in case said reporting base station is not allowed to perform a subsequent relocation of access control.

19. The method according to one of claims 1 to 18, further comprising the step of signaling from the controlling base station a relocation request message indicating a reporting base station to which resource management control functionality of at least a part of the cells is to be relocated to another controlling base station, in case the controlling base station signaling the relocation request message does not have resource management control functionality for each of said cells.

20. A base station for relocating to another base station within a mobile communication network resource management control functionality to shared channels in a plurality of cells, each cell being controlled by a base station, wherein each of the shared channels is shared by a plurality of mobile terminals within a cell, the base station comprising:
receiving means for receiving information from each reporting base station,
processing means for estimating the signaling load between the base station and each reporting base station or the processing load at each reporting base station and the base station, wherein the estimation is based on said received information,
wherein the processing means is adapted to determine whether to relocate the resource management control functionality for at least a part of said plurality of cells from the base station to a reporting base station, by evaluating the estimated load at the base station, and
wherein the processing means is further adapted to select a reporting base station to which resource management control functionality is to be relocated based on the estimated load in case it has determined to relocate resource management control functionality, and
relocation means for relocating resource management control functionality for at least said part of said plurality of cells from the base station to the selected reporting base station in case the processing means has determined to relocate resource management control functionality.

21. The base station according to claim 20, further comprising means adapted to perform the steps of a relocation method according to one of claims 2 to 19.

22. A mobile communication system in which resource management control functionality to shared channels in a plurality of cells is relocated from a controlling base station to another base station, each cell being controlled by a base station, wherein each of the shared channels is shared by a plurality of mobile terminals within a cell, the mobile communication system comprising a plurality of base stations according to claim 20 or 21 and a plurality of mobile terminals.

23. A computer-readable medium for storing instructions that, when executed on a processor, cause the processor to relocate from a controlling base station to another base station within a mobile communication network resource management control functionality to shared channels in a plurality of cells, each cell being controlled by a base station, wherein each of the shared channels is shared by a plurality of mobile terminals within a cell by:
receiving information from each reporting base station at the controlling base station,
estimating at the controlling base station the signaling load between the controlling base station and each reporting base station or the processing load at each reporting base station, wherein the estimation is based on said received information,
determining whether to relocate said resource management control functionality for at least a part of said plurality of cells from the controlling base station to a reporting base station, by evaluating the estimated load at the controlling base station,
in case it is determined to relocate resource management control functionality,
selecting at the controlling base station a reporting base station to which resource management control functionality is to be relocated based on the estimated load and
relocating resource management control functionality for at least said part of said plurality of cells from the controlling base station to the selected reporting base station.

24. The computer-readable medium according to claim 23, further storing instructions that, when executed on a processor, cause the processor to perform the steps of a method according to one of claims 2 to 19.

## Patentansprüche

1. Verfahren zum Verlagern von Ressourcenverwaltungs-Steuerfunktionalität gemeinsam genutzter Kanäle in einer Vielzahl von Zellen von einer steuernden Basisstation zu einer anderen Basisstation innerhalb eines Mobilkommunikations-Netzwerks,
wobei jede Zelle durch eine Basisstation gesteuert wird und jeder der gemeinsam genutzten Kanäle gemeinsam von einer Vielzahl von Mobil-Endgeräten innerhalb einer Zelle genutzt wird und das Verfahren die folgenden Schritte umfasst:
Empfangen von Informationen von jeder berichtenden Basisstation an der steuernden Basisstation,
Schätzen der Signalisierungslast zwischen der steuernden Basisstation und jeder der berichtenden Basisstationen oder der Verarbeitungslast an jeder berichtenden Basisstation und der steuernden Basisstation an der steuernden Basisstation, wobei die Schätzung auf den empfangenen Informationen basiert,
Feststellen, ob die Ressourcenverwaltungs-Steuerungsfunktionalität für wenigstens einen Teil der Vielzahl von Zellen von der steuernden Basisstation zu einer berichtenden Basisstation zu verlagern ist, indem die geschätzte Last an der steuernden Basisstation bewertet wird,
wenn festgestellt wird, dass Ressourcenverwaltungs-Steuerfunktionalität zu verlagern ist:
Auswählen einer berichtenden Basisstation, zu der Ressourcenverwaltungs-Steuerfunktionalität zu verlagern ist, an der steuernden Basisstation auf Basis der geschätzten Last, und
Verlagern von Ressourcenverwaltungs-Steuerfunktionalität für wenigstens einen Teil der Vielzahl von Zellen von der steuernden Basisstation zu der ausgewählten berichtenden Basisstation.

2. Verfahren nach Anspruch 1, wobei die Ressourcenverwaltungs-Steuerfunktionalität wenigstens anfängliche Zellen- und Funkverbindungs-Konfiguration, Verbindungszulassungssteuerung oder Laststeuerung umfasst.

3. Verfahren nach Anspruch 1 oder 2, wobei die Ressourcenverwaltungs-Steuerfunktionalität für die verbleibenden Zellen an der steuernden Basisstation beibehalten oder zu einer anderen berichtenden Basisstation verlagert wird, die durch die steuernde Basisstation ausgewählt wird.

4. Verfahren nach einem der Ansprüche 1 bis 3, wobei die von jeder berichtenden Basisstation empfangenen Informationen die Dienstgüte anzeigen, die jedem Mobil-Endgerät, das einen gemeinsam genutzten Kanal nutzt, durch die berichtende Basisstation bereitgestellt wird, und
beim Schritt des Schätzens die steuernde Basisstation die Signalisierungslast auf Basis der Anzahl von Mobil-Endgeräten schätzt, für die Messberichte von einer jeweiligen berichtenden Basisstation empfangen werden.

5. Verfahren nach Anspruch 4, wobei die berichtete Dienstgüte entweder eine bereitgestellte Netto-Bitrate, die von jedem Mobil-Endgerät erzielt wird, das einen gemeinsam genutzten Kanal innerhalb einer Zelle benutzt, oder eine Block-Fehlerrate von Daten, die zu den Mobil-Endgeräten gesendet werden, die einen gemeinsam genutzten Kanal nutzen, oder eine Kombination derselben anzeigt.

6. Verfahren nach einem der Ansprüche 1 bis 3, wobei die durch die steuernde Basisstation empfangenen Informationen die Anzahl von Mobil-Endgeräten anzeigen, die unter einer jeweiligen berichtenden Basisstation einen gemeinsam genutzten Kanal nutzen und,
beim Schritt des Schätzens die steuernde Basisstation die Signalisierungslast auf Basis der Anzahl von Mobil-Endgeräten schätzt, die in den empfangenen Informationen angezeigt wird.

7. Verfahren nach einem der Ansprüche 4 bis 6, wobei die erste Basisstation als die nächste steuernde Basisstation die berichtende Basisstation auswählt, die die gröβ-te Anzahl von Mobil-Endgeräten berichtet.

8. Verfahren nach einem der Ansprüche 1 bis 3, wobei die an der steuernden Basisstation empfangenen Informationen die Verarbeitungslast an der jeweiligen berichtenden Basisstation anzeigen, und
festgestellt wird, dass Ressourcenverwaltungs-Steuerfunktionalität zu verlagern ist, wenn die Verarbeitungslast an der steuernden Basisstation über einem vorgegebenen oberen Verarbeitungslast-Schwellenwert liegt und wenigstens ein berichteter Verarbeitungs- und/oder Signalisierungslast-Wert unter einem vorgegebenen unteren Last-Schwellenwert liegt.

9. Verfahren nach Anspruch 8, wobei die Verlagerung ausgelöst wird, wenn die Beziehung zwischen dem oberen und dem unteren Schwellenwert über einen vorgegebenen Zeitraum beibehalten wird.

10. Verfahren nach Anspruch 8 oder 9, wobei beim Schritt des Auswählens der berichtenden Basisstation, zu der Ressourcenverwaltungs-Steuerfunktionalität für wenigstens einen Teil der Zellen verlagert werden soll, die berichtende Basisstation, die eine Prozess- und/oder eine Signalisierungslast berichtet hat, die geringer ist als der vorgegebene untere Last-Schwellenwert, ausgewählt wird.

11. Verfahren nach einem der Ansprüche 1 bis 10, das des Weiteren den Schritt des Sendens eines Verlagerungsbefehls von der steuernden Basisstation zu der ausgewählten berichtenden Basisstation umfasst, der die Verlagerung der Ressourcenverwaltungs-Steuerfunktionalität für die gemeinsam genutzten Kanäle wenigstens eines Teils der Zellen anzeigt.

12. Verfahren nach Anspruch 11, wobei die Verlagerungs-Anforderungsmitteilung des Weiteren Zellen-Kennungen der Zellen, für die Ressourcenverwaltungs-Steuerfunktionalität zu der ausgewählten berichtenden Basisstation verlagert wird, und eine Anzeige dahingehend umfasst, ob die ausgewählte berichtende Basisstation eine anschließende Verlagerung von Ressourcenverwaltungs-Steuerfunktionalität durchführen darf.

13. Verfahren nach Anspruch 12, wobei, wenn die steuernde Basisstation Ressourcenverwaltungs-Steuerfunktionalität nur für einen Teil der Zellen verlagert, die Verlagerungs-Anforderungsmitteilung des Weiteren Zellen-Kennungen der Zellen umfasst, die von anderen Basisstationen als den ausgewählten berichtenden Basisstationen zu steuern sind.

14. Verfahren nach einem der Ansprüche 11 bis 13, das des Weiteren den Schritt des Sendens eines Containers von der steuernden Basisstation zu der ausgewählten berichtenden Basisstation umfasst, der Informationen umfasst, die bei dem Schätzschritt oder zur Laststeuerung beim Senden der Verlagerungs-Anforderungsmitteilung zu der ausgewählten Basisstation im Fall einer verlustfreien Verlagerung von Ressourcenverwaltungs-Steuerfunktionalität zu verwenden sind.

15. Verfahren nach einem der Ansprüche 11 bis 14, das des Weiteren den Schritt des Sendens einer Setup-Anforderung von der steuernden Basisstation zu Basisstationen umfasst, zu denen keine Ressourcenverwaltungs-Steuerfunktionalität für gemeinsam genutzte Kanäle verlagert wird, wobei die Setup-Mitteilung die Zellen-Kennung der neuen steuernden Basisstation umfasst.

16. Verfahren nach einem der Ansprüche 1 bis 15, das des Weiteren den Schritt umfasst, in dem einer berichtenden Basisstation, zu der Ressourcenverwaltungs-Steuerfunktionalität eines Teils der Zellen verlagert wird, in der Verlagerungs-Anforderungsmittelung wenigstens eine Zellen-Kennung anderer Basisstationen angezeigt wird, zu denen Ressourcenverwaltungs-Steuerfunktionalität eines anderen Teils der Zellen verlagert wird.

17. Verfahren nach einem der Ansprüche 11 bis 16, das des Weiteren den Schritt umfasst, in dem an der berichtenden Basisstation, zu der Ressourcenverwaltungs-Steuerfunktionalität eines Teils von Zellen verlagert wird, Informationen empfangen werden, die genutzt werden, um die Signalisierungslast oder Verarbeitungslast von Basisstationen zu schätzen, die eine Zelle steuern, für die der berichtenden Basisstation Ressourcenverwaltungs-Steuerfunktionalität von der steuernden Basisstation zugewiesen worden ist.

18. Verfahren nach Anspruch 17, das des Weiteren den Schritt umfasst, in dem von der berichtenden Basisstation die Informationen zu der Basisstation weitergeleitet werden, für die die Anzeige zum Durchführen der anschließenden Verlagerung von Ressourcenverwaltungs-Steuerfunktionalität empfangen worden ist, wenn die berichtende Basisstation nicht eine anschießende Verlagerung von Zugriffssteuerung durchführen darf.

19. Verfahren nach einem der Ansprüche 1 bis 18, das des Weiteren den Schritt umfasst, in dem von der steuernden Basisstation eine Verlagerungs-Anforderungsmitteilung, die eine berichtende Basisstation anzeigt, zu der Ressourcenverwaltungs-Steuerfunktionalität wenigstens eines Teils der Zellen verlagert werden soll, einer anderen steuernden Basisstation signalisiert wird, wenn die steuernde Basisstation, die die Verlagerungs-Anforderungsmitteilung signalisiert, keine Ressourcenverwaltungs-Steuerfunktionalität für jede der Zellen besitzt.

20. Basisstation zum Verlagern von Ressourcenverwaltungs-Steuerfunktionalität gemeinsam genutzter Kanäle in einer Vielzahl von Zellen zu einer anderen Basisstation innerhalb eines Mobilkommunikations-Netzwerks, wobei jede Zelle durch eine Basisstation gesteuert wird und jeder der gemeinsam genutzten Kanäle gemeinsam von einer Vielzahl von Mobil-Endgeräten innerhalb einer Zelle genutzt wird und die Basisstation umfasst:
eine Empfangseinrichtung zum Empfangen von Informationen von jeder berichtenden Basisstation,
eine Verarbeitungseinrichtung zum Schätzen der Signalisierungslast zwischen der Basisstation und jeder berichtenden Basisstation oder der Verarbeitungslast an jeder berichtenden Basisstation und der Basisstation, wobei die Schätzung auf den empfangenen Informationen basiert,
wobei die Verarbeitungseinrichtung so eingerichtet ist, dass sie bestimmt, ob die Ressourcenverwaltungs-Steuerfunktionalität für wenigstens einen Teil der Vielzahl von Zellen von der Basisstation zu einer berichtenden Basisstation zu verlagern ist, indem sie die geschätzte Last an der Basisstation bewertet, und
wobei die Verarbeitungseinrichtung des Weiteren so eingerichtet ist, dass sie eine berichtende Basisstation, zu der Ressourcenverwaltungs-Steuerfunktionalität zu verlagern ist, auf Basis der geschätzten Last auswählt, wenn bestimmt worden ist, dass Ressourcenverwaltungs-Steuerfunktionalität zu verlagern ist, und
eine Verlagerungseinrichtung zum Verlagern von Ressourcenverwaltungs-Steuerfunktionalität für wenigstens den Teil der Vielzahl von Zellen von der Basisstation zu der ausgewählten berichtenden Basisstation, wenn die Verarbeitungseinrichtung bestimmt hat, dass Ressourcenverwaltungs-Steuerfunktionalität zu verlagern ist.

21. Basisstation nach Anspruch 20, die des Weiteren eine Einrichtung umfasst, die so eingerichtet ist, dass sie die Schritte des Verlagerungsverfahrens nach einem der Ansprüche 2 bis 19 durchführt.

22. Mobilkommunikationssystem, in dem Ressourcenverwaltungs-Steuerfunktionalität gemeinsam genutzter Kanäle in einer Vielzahl von Zellen von einer steuernden Basisstation zu einer anderen Basisstation verlagert wird, wobei jede Zelle durch eine Basisstation gesteuert wird, jeder der gemeinsam genutzten Kanäle gemeinsam von einer Vielzahl von Mobil-Endgeräten innerhalb einer Zelle genutzt wird und das Mobilkommunikationssystem eine Vielzahl von Basisstationen nach Anspruch 20 oder 21 sowie eine Vielzahl von Mobil-Endgeräten umfasst.

23. Computerlesbares Medium zum Speichern von Befehlen, die, wenn sie auf einem Prozessor ausgeführt werden, den Prozessor veranlassen, Ressourcenverwaltungs-Steuerfunktionalität gemeinsam genutzter Kanäle in einer Vielzahl von Zellen von einer steuernden Basisstation zu einer anderen Basisstation innerhalb eines Mobilkommunikations-Netzwerks zu verlagern; wobei jede Zelle durch eine Basisstation gesteuert wird und jeder der gemeinsam genutzten Kanäle gemeinsam von einer Vielzahl von Mobil-Endgeräten innerhalb einer Zelle genutzt wird, indem:
Informationen von jeder berichtenden Basisstation an der steuernden Basisstation empfangen werden,
an der steuernden Basisstation die Signalisierungslast zwischen der steuernden Basisstation und jeder berichtenden Basisstation oder die Verarbeitungslast an jeder berichtenden Basisstation geschätzt wird, wobei die Schätzung auf den empfangenen Informationen basiert,
bestimmt wird, ob die Ressourcenverwaltungs-Steuerfunktionalität für wenigstens einen Teil der Vielzahl von Zellen von der steuernden Basisstation zu einer berichtenden Basisstation zu verlagern ist, indem die geschätzte Last an der steuernden Basisstation bewertet wird,
wenn bestimmt wird, dass Ressourcenverwaltungs-Steuerfunktionalität zu verlagern ist,
an der steuernden Basisstation eine berichtende Basisstation, zu der Ressourcenverwaltungs-Steuerfunktionalität zu verlagern ist, auf Basis der geschätzten Last ausgewählt wird, und
Ressourcenverwaltungs-Steuerfunktionalität für wenigstens den Teil der Vielzahl von Zellen von der steuernden Basisstation zu der ausgewählten berichtenden Basisstation verlagert wird.

24. Computerlesbares Medium nach Anspruch 23, das des Weiteren Befehle speichert, die, wenn sie auf einem Prozessor ausgeführt werden, den Prozessor veranlassen, die Schritte eines Verfahrens nach einem der Ansprüche 2 bis 19 durchzuführen.

## Revendications

1. Procédé pour déplacer d'une station de base de commande à une autre station de base à l'intérieur d'un réseau de communication mobile la fonctionnalité de commande de gestion des ressources des canaux partagés dans une pluralité de cellules, chaque cellule étant commandée par une station de base, dans lequel chacun des canaux partagés est partagé par une pluralité de terminaux mobiles à l'intérieur d'une cellule, le procédé comprenant les étapes consistant à:
recevoir les informations provenant de chaque station de base de service à la station de base de commande,
estimer à la station de base de commande la charge de signalisation entre la station de base de commande et
chaque station de base de service ou la charge de traitement à chaque station de base de service et à la station de base de commande, dans lequel l'estimation est basée sur lesdites informations reçues,
déterminer s'il faut déplacer ladite fonctionnalité de commande de gestion des ressources pour au moins une partie de ladite pluralité de cellules de la station de base de commande à une station de base de service, en évaluant la charge estimée à la station de base de commande,
dans le cas où il est déterminé de déplacer la fonctionnalité de commande de gestion des ressources,
sélectionner à la station de base de commande une station de base de service à laquelle la fonctionnalité de commande de gestion des ressources doit être déplacée sur la base de la charge estimée et
déplacer la fonctionnalité de commande de gestion des ressources pour au moins ladite partie de ladite pluralité de cellules de la station de base de commande à la station de base de service sélectionnée.

2. Procédé selon la revendication 1, dans lequel la fonctionnalité de commande de gestion des ressources comprend au moins l'une de la configuration de la première cellule et de la liaison radio, de la commande d'acceptation d'un appel et de la commande de charge.

3. Procédé selon la revendication 1 ou 2, dans lequel la fonctionnalité de commande de gestion des ressources pour les cellules restantes est maintenue à la station de base de commande ou est déplacée à une autre station de base de service sélectionnée par la station de base de commande.

4. Procédé selon l'une quelconque des revendications 1 à 3, dans lequel les informations reçues de chaque station de base de service indiquent la qualité des services fournis à chaque terminal mobile utilisant un canal partagé par la station de base de service, et dans l'étape d'estimation, la station de base de commande estime la charge de signalisation sur la base du nombre de terminaux mobiles pour lesquels des rapports de mesure sont reçus provenant d'une station de base de service respective.

5. Procédé selon la revendication 4, dans lequel la qualité de service rapportée indique soit un ou une combinaison d'un débit binaire final prévu réalisé par chaque terminal mobile utilisant un canal partagé à l'intérieur d'une cellule, soit un taux d'erreur sur les blocs des données transmises aux terminaux mobiles utilisant un canal partagé.

6. Procédé selon l'une quelconque des revendications 1 à 3, dans lequel les informations reçues par la station de base de commande indiquent le nombre de terminaux mobiles utilisant un canal partagé sous une station de base de service respective, et
dans l'étape d'estimation, la station de base de commande estime la charge de signalisation à partir du nombre de terminaux mobiles indiqué dans les informations reçues.

7. Procédé selon l'une quelconque des revendications 4 à 6, dans lequel la première station de base sélectionne la station de base de service comme étant la station de base de commande suivante qui signale le plus grand nombre de terminaux mobiles.

8. Procédé selon l'une quelconque des revendications 1 à 3, dans lequel les informations reçues à la station de base de commande indiquent la charge de traitement à la station de base de service respective, et
il est déterminé de déplacer la fonctionnalité de commande de gestion des ressources dans le cas où la charge de traitement à la station de base de commande est au-dessus d'un seuil de charge de traitement supérieur prédéterminé et au moins une valeur de charge de traitement et/ou de signalisation rapportée est en dessous d'un seuil de charge inférieur prédéterminé.

9. Procédé selon la revendication 8, dans lequel la relocalisation est déclenchée si la relation entre le seuil supérieur et inférieur est maintenue pendant une période de temps prédéterminée.

10. Procédé selon la revendication 8 ou 9, dans lequel, dans l'étape de sélection de la station de base de service à laquelle la fonctionnalité de commande de gestion des ressources pour au moins une partie desdites cellules doit être déplacée, la station de base de service ayant signalé une charge de traitement et/ou de signalisation plus petite que le seuil de charge inférieur prédéterminé, est sélectionnée.

11. Procédé selon l'une quelconque des revendications 1 à 10, comprenant, en outre, l'étape consistant à transmettre de la station de base de commande à la station de base de service sélectionnée une commande de relocalisation indiquant la relocalisation de la fonctionnalité de commande de gestion des ressources pour lesdits canaux partagés d'au moins une partie desdites cellules.

12. Procédé selon la revendication 11; dans lequel le message de commande de relocalisation comprend, en outre, des identificateurs de cellule des cellules pour lesquelles la fonctionnalité de commande de gestion des ressources est déplacée jusqu'à la station de base de service sélectionnée et une indication si la station de base de service sélectionnée est autorisée à exécuter une relocalisation ultérieure de la fonctionnalité de commande de gestion des ressources.

13. Procédé selon la revendication 12, dans lequel, dans le cas où la station de base de commande déplace la fonctionnalité de commande de gestion des ressources seulement pour une partie desdites cellules, le message de demande de relocalisation comprend, en outre, des identificateurs de cellule des cellules qui doivent être commandées par des stations de base autres que lesdites stations de base de service sélectionnées.

14. Procédé selon l'une quelconque des revendications 11 à 13, comprenant, en outre, l'étape consistant à transmettre de la station de base de commande à ladite station de base de service sélectionnée un conteneur de données comprenant les informations qui doivent être utilisées dans ladite étape d'estimation ou une commande de charge lors la transmission du message de demande de relocalisation à ladite station de base sélectionnée dans le cas d'une relocalisation sans perte de la fonctionnalité de commande de gestion des ressources.

15. Procédé selon l'une quelconque des revendications 11 à 14, comprenant, en outre, l'étape consistant à transmettre de la station de base de commande une demande de réinitialisation aux stations de base auxquelles aucune fonctionnalité de commande de gestion des ressources pour les canaux partagés n'est déplacée, dans lequel le message de réinitialisation comprend l'identificateur de cellule de la nouvelle station de base de commande.

16. Procédé selon l'une quelconque des revendications 1 à 15, comprenant, en outre, l'étape consistant à indiquer à une station de base de service à laquelle la fonctionnalité de commande de gestion des ressources d'une partie des cellules est déplacée, au moins un identificateur de cellule des autres stations de base auxquelles la fonctionnalité de commande de gestion des ressources d'une autre partie des cellules est déplacée dans le message de demande de relocalisation.

17. Procédé selon l'une quelconque des revendications 11 à 16, comprenant, en outre, l'étape consistant à recevoir à ladite station de base de service à laquelle la fonctionnalité de commande de gestion des ressources d'une partie des cellules est déplacée, les informations utilisées pour estimer la charge de signalisation ou la charge de traitement provenant des stations de base commandant une cellule pour laquelle ladite station de base de service a été affectée de la fonctionnalité de commande de gestion des ressources provenant de la station de base de commande.

18. Procédé selon la revendication 17, comprenant, en outre, l'étape consistant à envoyer de ladite station de base de service lesdites informations à la station de base pour laquelle l'indication d'exécuter la relocalisation ultérieure de la fonctionnalité de commande de gestion des ressources a été reçue dans le cas où ladite station de base de service n'est pas autorisée à exécuter une relocalisation ultérieure d'une commande d'accès.

19. Procédé selon l'une quelconque des revendications 1 à 18, comprenant, en outre, l'étape consistant à signaler depuis la station de base de commande un message de demande de relocalisation indiquant une station de base de service à laquelle la fonctionnalité de commande de gestion des ressources d'au moins une partie des cellules doit être déplacée à une autre station de base de commande dans le cas où la station de base de commande signalant le message de demande de relocalisation n'a pas la fonctionnalité de commande de gestion des ressources pour chacune desdites cellules.

20. Station de base pour déplacer à une autre station de base à l'intérieur d'un réseau de communication mobile la fonctionnalité de commande de gestion des ressources des canaux partagés dans une pluralité de cellules, chaque cellule étant commandée par une station de base, dans laquelle chacun des canaux partagés est partagé par une pluralité de terminaux mobiles à l'intérieur d'une cellule, la station de base comprenant :
un moyen de réception pour recevoir les informations de chaque station de base de service,
un moyen de traitement pour estimer la charge de signalisation entre la station de base et chaque station de base de service ou la charge de traitement à chaque station de base de service et à la station de base, dans laquelle l'estimation est basée sur lesdites informations reçues,
dans laquelle le moyen de traitement est adapté pour déterminer s'il faut déplacer la fonctionnalité de commande de gestion des ressources pour au moins une partie de ladite pluralité de cellules de la station de base à une station de base de service, en évaluant la charge estimée à la station de base, et
dans laquelle le moyen de traitement est, en outre, adapté pour sélectionner une station de base de service à laquelle la fonctionnalité de commande de gestion des ressources doit être déplacée sur la base de la charge estimée dans le cas où il a déterminé de déplacer la fonctionnalité de commande de gestion des ressources, et
un moyen de relocalisation pour déplacer la fonctionnalité de commande de gestion des ressources pour au moins ladite partie de ladite pluralité de cellules de la station de base à la station de base de service sélectionnée dans le cas où le moyen de traitement a déterminé de déplacer la fonctionnalité de commande de gestion des ressources.

21. Station de base selon la revendication 20, comprenant, en outre, un moyen adapté pour exécuter les étapes d'un procédé de relocalisation selon l'une quelconque des revendications 2 à 19.

22. Système de communication mobile dans lequel la fonctionnalité de commande de gestion des ressources pour des canaux partagés dans une pluralité de cellules est déplacée d'une station de base de commande à une autre station de base, chaque cellule étant commandée par une station de base, dans lequel chacun des canaux partagés est partagé par une pluralité de terminaux mobiles à l'intérieur d'une cellule, le système de communication mobile comprenant une pluralité de stations de base selon la revendication 20 ou 21 et une pluralité de terminaux mobiles.

23. Support lisible par un ordinateur pour stocker des instructions qui, lorsqu'elles sont exécutées par un processeur, font que le processeur déplace d'une station de base de commande à une autre station de base à l'intérieur d'un réseau de communication mobile la fonctionnalité de commande de gestion des ressources pour des canaux partagés dans une pluralité de cellules, chaque cellule étant commandée par une station de base, dans lequel chacun des canaux partagés est partagé par une pluralité de terminaux mobiles à l'intérieur d'une cellule, en :
recevant les informations de chaque station de base de service à la station de base de commande,
estimant à la station de base de commande la charge de signalisation entre la station de base de commande et chaque station de base de service ou la charge de traitement à chaque station de base de service, dans lequel l'estimation est basée sur lesdites informations reçues,
déterminant s'il faut déplacer ladite fonctionnalité de commande de gestion des ressources pour au moins une partie de ladite pluralité de cellules de la station de base de commande à une station de base de service, en évaluant la charge estimée à la station de base de commande,
dans le cas où il est déterminé de déplacer la fonctionnalité de commande de gestion des ressources,
en sélectionnant à la station de base de commande une station de base de service à laquelle la fonctionnalité de commande de gestion des ressources doit être déplacée sur la base de la charge estimée et
en déplaçant la fonctionnalité de commande de gestion des ressources pour au moins ladite partie de ladite pluralité de cellules de la station de base de commande à la station de base de service sélectionnée.

24. Support lisible par un ordinateur selon la revendication 23, stockant, en outre, des instructions qui, lorsqu'elles sont exécutées par un processeur, font que le processeur exécute les étapes d'un procédé selon l'une quelconque des revendications 2 à 19.
